**Europäisches Patentamt**

**European Patent Office**

**Office européen des brevets**

(11) Veröffentlichungsnummer : **0 329 136 B1**

(12) # EUROPÄISCHE PATENTSCHRIFT

(45) Veröffentlichungstag der Patentschrift :
**26.08.92 Patentblatt 92/35**

(51) Int. Cl.⁵ : **B62J 7/04, B62J 9/00**

(21) Anmeldenummer : **89102681.7**

(22) Anmeldetag : **16.02.89**

(54) Gepäckträger für Zweiradfahrzeuge.

(30) Priorität : **16.02.88 DE 3804753**

(43) Veröffentlichungstag der Anmeldung :
**23.08.89 Patentblatt 89/34**

(45) Bekanntmachung des Hinweises auf die
Patenterteilung :
**26.08.92 Patentblatt 92/35**

(84) Benannte Vertragsstaaten :
**AT BE CH DE ES FR GB GR IT LI LU NL SE**

(56) Entgegenhaltungen :
**EP-A- 0 128 810**
**DE-A- 3 513 878**
**DE-C- 381 803**
**DE-U- 8 135 492**
**US-A- 4 266 703**

(73) Patentinhaber : **Kohler, Hans**
**Mainauweg 7**
**W-7750 Konstanz 19 (DE)**

(72) Erfinder : **Kohler, Hans**
**Mainauweg 7**
**W-7750 Konstanz 19 (DE)**

(74) Vertreter : **Prechtel, Jörg, Dipl.-Phys. Dr. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach86 08**
**20**
**W-8000 München 86 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 329 136 B1

**Beschreibung**

Die Erfindung betrifft einen Gepäckträger nach dem Oberbegriff des Anspruchs 1.

Ein derartiger Gepäckträger ist bekannt (DE-A-35 13 878). Die Schließeinrichtung wird hier von Bolzen 90 gebildet, die starr an einem Querbügel 48 befestigt sind. Der Querbügel wiederum nimmt das Zylindergehäuse eines Zylinderschlosses als Schliegselement auf. Normalerweise befindet sich der Querbügel samt den Bolzen 90 in seiner Einfahrstellung (Schließstellung der Schließeinrichtung). In dieser Stellung kann, nach Verdrehen des Schlüssels in dessen Entsperr-Stellung, die Wanne völlig unabhängig von der Schließeinrichtung bewegt werden. Zum Herausnehmen bzw. Einsetzen eines Anschlußkopfes eines Anschlußkörpers 102 wird das Zylinderschloß zuerst in Entsperrstellung verdreht und anschließend samt Querbügel 48 nach außen in die Öffnungsstellung gezogen. Auch in dieser Stellung der Schließeinrichtung kann die Wanne 56 frei hin und her bewegt werden. Beim Herausnehmen bzw. Einsetzen eines Anschlußkopfes ist folglich eine gesonderte Betätigung des Querbügels erforderlich.

Der Erfindung liegt die Aufgabe zugrunde, bei einem Gepäckträger der eingangs genannten Art die Bedienung der Schließeinrichtung für die Zusatzeinrichtung zu vereinfachen.

Diese Aufgabe wird durch einen Gepäckträger mit den Merkmalen des Anspruchs 1 oder mit den Merkmalen des Anspruchs 2 gelöst. Auf diese Weise wird erreicht, daß die Schließeinrichtung beim Wanneneinschub automatisch in die Schließstellung bewegt wird und umgekehrt bei Wannenauszug in die Öffnungsstellung bewegt wird, so daß die beim Stand der Technik erforderliche zusätzliche Bedienung des die Schließbolzen tragenden Bügels entfällt. Die Gefahr, daß bei ausgezogener Wanne die Zusatzeinrichtung sich unbeabsichtigt vom Gepäckträger löst, besteht nicht, da hierzu die Zusatzeinrichtung zuerst in Längsrichtung des jeweiligen Anschlußloches zu schieben und anschließend vom Deckel weg zu bewegen ist.

Die Ausführungsform gemäß Anspruch 1 zeichnet sich durch besonders einfachen Aufbau aus. Jedoch setzt diese Lösung entsprechenden Bewegungsraum, insbesondere eine entsprechende weite und langgestreckte Schließbolzen-Aufnahmenut, im Deckel voraus. Auch ist der Schließbolzen bei herausgezogener Wanne sichtbar.

Die Ausführungsform gemäß Anspruch 2 vermeidet diese Nachteile.

Besonders bevorzugte alternative Ausgestaltungen des Schließteils sind in den Ansprüchen 3 und 18 angegeben.

Eine besonders einfache Übertragungsmechanik mit Rückfederung der Schließeinrichtung in ihre Öffnungsstellung bei Ausschub der Wanne ist im Anspruch 4 angegeben.

Der Federbügel in der bevorzugten Ausgestaltung gemäß Anspruch 5 sorgt für die federne Vorspannung der Schließeinrichtungen in ihre Öffnungsstellung sowie gleichzeitig für die Kraftübertragung mit Kraftumlenkung von der Schublade auf das jeweilige Schließteil, wobei auch eine besonders einfach zu realisierende und sicher sperrende Linearbewegung des Schließteils (in diese Richtung senkrecht zur Bedienungsrichtung der Schublade) in Frage kommt. Der Federbügel kann zur gleichzeitigen Betätigung zweier Schließteile eingesetzt werden. Es ergibt sich eine geringe Bauhöhe der Anordnung aus Federbügel und Schließteil, so daß diese Anordnung ohne weiteres an der Unterseite des Deckels angebracht werden kann ohne hierbei den Wannenauszug zu behindern.

Zur sicheren Führung des Federbügels wird vorgeschlagen, daß der andere Verbindungsschenkel mit einer ZusatzFederbügelschlaufe ausgebildet ist, die ein zur Bewegungsrichtung der Schublade paralleles Langloch bildet, und daß in das Langloch ein am Deckel befestigter Führungsbolzen eingreift.

Bei dem bekannten Gepäckträger (DE-A-35 14 878) sind die beiden nach außen abgewinkelten Wannenlängsränder jeweils in einer integral mit dem Deckel ausgebildeten Führungsleiste an der Deckelunterseite geführt.

Um bei ansprechendem Äußeren für hohe mechanische Belastbarkeit des Gepäckträgers zu sorgen mit der Möglichkeit für Deckel und/oder Wanne auch kostengünstiges, mechanisch geringer beanspruchbares Material, wie z.B. Kunststoff, einsetzen zu können, wird vorgeschlagen, daß längs des Deckelrandes in vorzugsweise geschlossener Schleife eine gesonderte Profilschiene verläuft, und daß die zur Bewegungsrichtung der Schublade parallelen Längsseiten-Abschnitte der Profilschiene als Führungsschiene für einen Rand der Wanne ausgebildet sind. Die Führungsprofilschiene kann von einem Metallprofil gebildet sein.

Vorzugsweise ist hierbei vorgesehen, daß die längs des Deckelrandes in geschlossener Schleife verlaufende Profilschiene im Querschnitt einem Doppel-C-Profil entspricht mit jeweils einer Ausfräsung im Bereich eines Endes der beiden Längsseitenabschnitte zum Herausleiten des Wannenrandes aus der Profilschiene. Ein derartiges Profil ist kostengünstig erhältlich und in einfacher Weise mit dem Deckel sowie dem Wannenrand zu verbinden.

Der Einbauraum für die Wanne zwischen Deckel und Rad bzw. Radschutzblech ist in vielen Fällen nicht besonders groß, so daß es für die Zugänglichkeit zum Wanneninhalt von Vorteil ist, wenn die Wanne weiter

2

ist als ihre Führung am Deckel es normalerweise erlaubt, herausgezogen werden kann. Dies wird in einer weiteren Ausführungsform der Erfindung dadurch erreicht, daß an beiden zur Bewegungsrichtung der Wanne parallelen Seiten des Gepäckträgers jeweils eine Führungsschiene vorgesehen ist, an welcher sowohl der Deckel als auch die Wanne längsverschiebbar geführt ist zum teleskopartigen Auszug der Wanne.

Um praktisch beliebige Gegenstände schnell und einfach auf der Auflagefläche des Deckels festlegen zu können, wird vorgeschlagen, daß wenigstens ein Zurrstrang zur Festlegung von Gegenständen auf der Auflagefläche des Deckels vorgesehen ist, dessen eines Ende am Deckel und dessen anderes Ende an einem Griffstück angebracht ist, und daß die Zurrstranglänge zwischen Deckel und Griffstück veränderbar ist. Das Griffstück kann dann je nach den Umständen über den Gegenstand gespannt und am Deckel eingehakt werden. Da der Zurrstrang bei nicht allzu großer Kraftaufwendung sich nur beschränkt dehnen läßt, ist es von Vorteil, wenn die Zurrstranglänge zwischen Deckel und Griffstück veränderbar ist. Dies wird in einer ersten Ausführungsform dadurch erreicht, daß das griffstückseitige Ende des Zurrstrangs mit veränderbarer Anzahl von Windungen am Griffstück festgelgt ist. Es muß dann lediglich, beispielsweise zur Verlängerung der effektiven Zurrstranglänge, eine entsprechende Anzahl von Windungen vom Griffstück abgespult werden.

In einer alternativen Ausführungsform ist vorgesehen, daß der Zurrstrang durch einen Schlitz des Griffstücks hindurchgeführt ist, dessen einer Schlitzrand von einem am Griffstück ausgebildeten Klemmhebel gebildet ist zur klemmenden Fixierung des Zurrstrangs in einer Klemmstellung des Klemmhebels. Eine manuelle Betätigung des Klemmhebels ist denkbar. Bevorzugt ist vorgesehen, daß der Klemmhebel vom gespannten Zurrstrang zwischen Griffstück und Deckel in seine Klemmstellung bewegbar ist. Auf diese Weise wird der Klemmhebel beim Spannen des Zurrstrangs automatisch in seiner Klemmstellung bewegt.

Entsprechend der gewünschten effektiven Zurrstranglänge ist das durch den Schlitz ragende freie Ende des Zurrstrangs mehr oder weniger groß. Damit dieses Ende nicht frei herumhängt, wird vorgeschlagen, daß das freie griffstückseitige Zurrstrangende am Zurrstrang zwischen Griffstück und Deckel mittels eines Verschiebeteils festlegbar ist.

Um das Gestänge an einer Gepäckträger-Längsseite in mechanisch stabiler und optisch ansprechender Weise am entsprechenden Festpunkt des Zweiradfahrzeugs, beispielsweise an der Radnabe, festlegen zu können mit der Möglichkeit einer einfachen und schnellen Anpassung an das jeweilige Radmodell, wird vorgeschlagen, daß das Gestänge einer Gepäckträgerlängsseite mittels eines Schuhs zusammengefaßt und über diesen an einem Festpunkt des Zweiradfahrzeugs, beispielsweise an der Radnabe, festlegbar ist, daß der Schuh mit einer Stecköffnung ausgebildet ist, um ein Steckende des Gestänges, in wahlweise unterschiedlichen Längspositionen, aufzunehmen, daß die Stecköffnung exzentrisch zum Festpunkt angeordnet ist, und daß der Schuh wahlweise in einer von zwei um 180° um die Gestängelängsachse gegeneinander verdrehten Stellungen am Steckende des Gestänges aufsteckbar und am Festpunkt festlegbar ist. Das Steckende des Gestänges (im Falle zweier Stangen - die beiden unteren Stangenenden) wird lediglich in die Stecköffnung eingesteckt und dort bei der gewünschten effektiven Gestängelänge fixiert. Aufgrund der Exzentrizität besteht eine einfache Verlagerungsmöglichkeit des Gestänges nach vorne bzw. hinten. Für den Fall, daß der Gepäckträger wahlweise in einer vorderen und einer hinteren Montageposition am Zweirad befestigbar ist (vordere Montageposition beispielsweise ohne Felgenbremse im Bereich des Gepäckträgers und hintere Montageposition mit Felgenbremse), wird vorgeschlagen, daß die Exzentrizität des Schuhs dem halben Abstand zwischen beiden Montagepositionen entspricht.

In einer Weiterbildung der Erfindung wird vorgeschlagen, daß an beiden zur Bewegungsrichtung der Wanne parallelen Wannenlängsrändern, vorzugsweise an der Wanneninnenseite, eine Winkelprofilschiene angebracht ist, die jeweils mit einer Winkelprofil-Gegenschiene an der Deckelunterseite als Wannenverschiebeführung zusammenwirkt. Dies ergibt ein ansprechendes Äußeres, da nunmehr die Wannenverschiebeführung verdeckt angeordnet ist. Auch besteht nicht die Gefahr des Eindringens von Wasser oder der Verschmutzung. Die Winkelprofilschienen sorgen für eine Aussteifung von Wanne und Deckel.

Als Weiterbildung der Schließeinrichtung wird vorgeschlagen, daß diese ein am Deckel in Bewegungsrichtung der Wanne verschiebbar gelagertes, vorzugsweise von einem Blechstanzteil gebildetes Kraftübertragungsteil umfaßt, welches über eine Kulissenführung, vorzugsweise Schräglochführung, an die quer zur Bewegungsrichtung der Wanne beweglich gelagerten Schließteile angreift. Dies ergibt eine mechanisch robuste Bauform geringer Einbauhöhe, die ohne weiteres ohne Einschränkung des Transportraums an der Deckelunterseite vorgesehen sein kann.

Die beiden Schließteile können über eine Vorspannfeder miteinander verbunden sein. Auf diese Weise werden die Schließteile in ihre Öffnungsstellung zurückgezogen und mit ihnen auch das Kraftübertragungsteil.

Dabei hat es sich als besonders günstig erwiesen, den Deckel und die Wanne mit ihren angeformten Führungsschienen jeweils aus Kunststoff zu formen oder aus einem Leichtmetall, insbesondere aus einer Aluminiumlegierung.

Es entsteht so ein einheitlicher Formkörper, der eine Unterteilung in Deckel und Wanne nur durch die Trennfuge im Bereich der Führungsschienen erkennen läßt. Der zweiteilige erfindungsgemäße Gepäckträger ist in geschlossener Lage ohne Vorsprünge an den Seitenwänden und zudem bei pultartig ausgebildeter Schmalseite ausreichend windschlüpfrig. Den Sicherheitswünschen des Benutzers wird durch die glatten Außenflächen sowie die Verriegelbarkeit des Deckels Rechnung getragen.

Zur Stabilisierung der verhältnismäßig dünnen Auflageplatte des Deckels sind dieser nach unten weisende vertikale Rippen angeformt sowie zwei Seiten- oder Flankenflächen, welche jeweils eine Führungsschiene aufnehmen, in die eine Gegenschiene der Wanne eingreift. Da sich diese Führungsschienen-Paarungen innerhalb der Seitenflächen des Deckels befinden, werden Außenwulste oder ähnliche Abkragungen vermieden.

Desweiteren dient den besseren Strömungswerten die Maßgabe, wonach Deckel und Wanne zumindest zu einer Schmalseite hin sich in Draufsicht verjüngen.

Der Deckel weist erfindungsgemäß im Verjüngungsbereich eine zur Auflagefläche geneigte sowie eine gegenläufige Pultfläche auf. Diese bilden einen nach oben gerichteten Kamm, der von der Auflagefläche aufragt und eine Begrenzung für Gepäckstücke darstellt. Außerdem ist die Wanne im Verjüngungsbereich mit einer bodenwärts geneigten Bugunterfläche versehen. Diese Ausgestaltung von Deckel und Wanne ergibt eine schiffsbugähnliche Form des einen Trägerendes, die als besonders günstige Ausgestaltung im Rahmen der gesehenen Aufgabe zu betrachten ist. Auch die Heckseite des erfindungsgemäßen Gepäckträgers ist verjüngt, dies bevorzugt bis zu einer Heckfläche, welche wenigstens einen Rückstrahler aufnimmt. Dieser ist also Teil der Wanne bzw. Schublade und aus Sicherheitsgründen besonders großflächig gestaltet.

Im übrigen hat es sich als günstig erwiesen, in den Deckel -- bevorzugt aber in den Wannenkörper -- seitliche Blinklichter zu integrieren, damit solche auch bei Zweirädern ohne auskragende Arme Verwendung finden können.

Üblicherweise wird der Gepäckträger so am Fahrzeugheck installiert, daß die Wanne nach inten herausziehbar ist; aus diesem Grund ist auch -- wie gesagt -- an ihrer Heckfläche der Rückstrahler vorgesehen. Jedoch ist es ebenso möglich -- und dieses ist eine neue Verwendungsweise von Gepäckträgern --, die beschriebene Heckfläche der Wanne mit einem Scheinwerfer auszurüsten und den Gepäckträger mit in Fahrtrictung weisendem Scheinwerfer am Vorderrad festzulegen; in diesem Falle ist die Wanne oder Schublade nach vorne hin auszuziehen.

Die Befestigung des erfindungsgemäßen Gepäckträgers erfolgt zum oberen Abschnitt der Radgabel hin mittels eines Winkelstückes oder eines Bügels, die im Deckel so befestigt sind, daß diese Verbindungsstelle bei geschlossener Wanne nicht zugänglich ist. Da der Abstand zwischen dem Gepäckträger einerseits und dem an die Radgabel angeschlossenen Schenkel des Winkelstückes verhältnismäßig gering bleibt, ist auch das Winkelstück selbst ohne ein Herausziehen der Wanne vom Zweiradfahrzeug nicht lösbar. Damit wird eine sichere Befestigung am Zweiradfahrzeug erreicht.

Erfindungsgemäß ist der Deckel also einerseits mittels des Winkelstückes sowie anderseits durch das Gestänge fester Teil des Zweiradfahrzeuges und in der Verlängerung seiner Pultfläche an der unteren Deckelkontur mit einem Schulterabsatz ausgestattet, der den Anschlag für eine entsprechende Stufung des Wannenrandes bildet. Dieser Anschlag ist erforderlich, um die Wanne in ihrer Schließstellung zu fixieren und damit auch in der Verschlußstellung der beschriebenen Schließbolzen.

Von zusätzlicher Bedeutung ist die paarweise Zuordnung der Anschlußlöcher, von denen eines in der Auflagefläche und das andere in der Seitenwand des Deckels vorgesehen ist, wobei beide Anschlußlöcher durch einen gemeinsamen Aufnahmeraum für ein Anschlußorgan des Zusatzteiles verbunden sind, weshalb auch nur ein Schließbolzen für ein Paar von Anschlußlöchern ausreicht. Die Konstruktion und Fertigung wird hierdurch vereinfacht.

Zu den Sicherheitseinrichtung des erfindungsgemäßen Gepäckträgers gehören auch -- an sich bekannte -- flexible Zurrstränge, welche über die Auflagefläche laufen. Diese sind einends in der Pultfläche des Deckels festgelegt und andernends durch ein Griffstück verbunden, welches mittels Hakenelementen am Gepäckträgerheck festgelegt werden kann. Diese Zurrstränge sind in üblicher Weise längenveränderlich und womit ihre Haltekraft einstellbar ist.

Weitere Vorteile, Merkmale und Einzelheiten der Erfindung ergeben sich aus der nachfolgenden beschreibung bevorzugter Ausführungsbeispiele sowie anhand der Zeichnung; diese zeigt in

Fig. 1 eine Schrägsicht eines teilweise wiedergegebenen Fahrrades mit einem -- einen Deckel und eine Wanne aufweisenden -- Gepäckträger;

Fig. 2 die Draufsicht auf den Gepäckträger der Fig. 1;

Fig. 3 die gegenüber Fig. 1, 2 vergrößerte Rückenansicht des Gepäckträgers;

Fig. 4 den Schnitt durch Fig. 2 nach deren Linie IV - IV;

Fig. 5 einen vergrößerten Ausschnitt aus Fig. 4;

Fig. 6 eine teilweise geschnittene Schrägsicht auf eine Ausführung des Gepäckträgers;

Fig. 7 eine Schrägsicht auf einen vergrößerten Ausschnitt der Fig. 6;

Fig. 8 eine Schrägsicht auf eine weitere Ausführungsform des Gepäckträgers;

Fig. 9 ein Detail des Gepäckträgers in gedrehter Schrägsicht;

Fig. 10 eine Seitenansicht des Gepäckträgers mit nach unten ragenden, in einem Schuh endenden Metallbügeln;

Fig. 11 eine der Fig. 10 entsprechende Seitenansicht in anderer Gebrauchsstellung;

Fig. 12 ein Ende eines Metallbügels;

Fig. 13 den Schnitt durch Fig. 12 nach deren Linie XIII - XIII mit Schuh;

Fig. 14 zwei Seitenansichten des Schuhs;

Fig. 15 eine Seitenansicht eines anderen Schuhs;

Fig. 16/17 Rücken- und Frontansichten des Schuhes in Fig. 15;

Fig. 18 eine der Fig. 13 entsprechende Darstellung der Ausführung nach Fig. 16, 17 (Teilschnitt gemäß Linie XVIII der Fig. 15);

Fig. 19 bis 23 Seitenansichten und Draufsichten zu Befestigungselementen für Zusatzeinrichtungen;

Fig. 24 und 25 Halteeinrichtungen für den Gepäckträger;

Fig. 26 einen Gepäckträger in Seitenansicht in anderer Gebrauchsstellung;

Fig. 27 ein vergrößertes Detail eines Gepäckträgers in Seitenansicht;

Fig. 28 die Draufsicht auf Fig. 27;

Fig. 29 die Stirnansicht zu Fig. 28;

Fig. 30 einen Abschnitt einer anderen Ausführung zu Fig. 27;

Fig. 31 die Draufsicht zu Fig. 30;

Fig. 32 eine Skizze eines Deckels mit Auflage;

Fig. 33 eine explosionsartige Gesamtansicht einer weiteren Ausführungsform eines Gepäckträgers;

Fig. 34 einen Detailschnitt nach Linie XXXIV-XXXIV in Fig. 33 im zusammengebauten Zustand;

Fig. 34A einen Detailschnitt entsprechend Fig. 34 einer alternativen Ausführungsform;

Fig. 35 eine Unteransicht des Deckels des Gepäckträgers gemäß Fig. 33 im Bereich der Schließeinrichtung;

Fig. 35A eine alternative Ausbildung der Schließeinrichtung;

Fig. 36 eine weitere Ausbildung der Schließeinrichtung;

Fig. 37 eine vergrößerte Seitenansicht von Zurrstrang und Griffstück in einer weiteren Ausführungsform bei losem Zurrstrang und

Fig. 38 die Anordnung gemäß Fig. 37 bei gespanntem Zurrstrang.

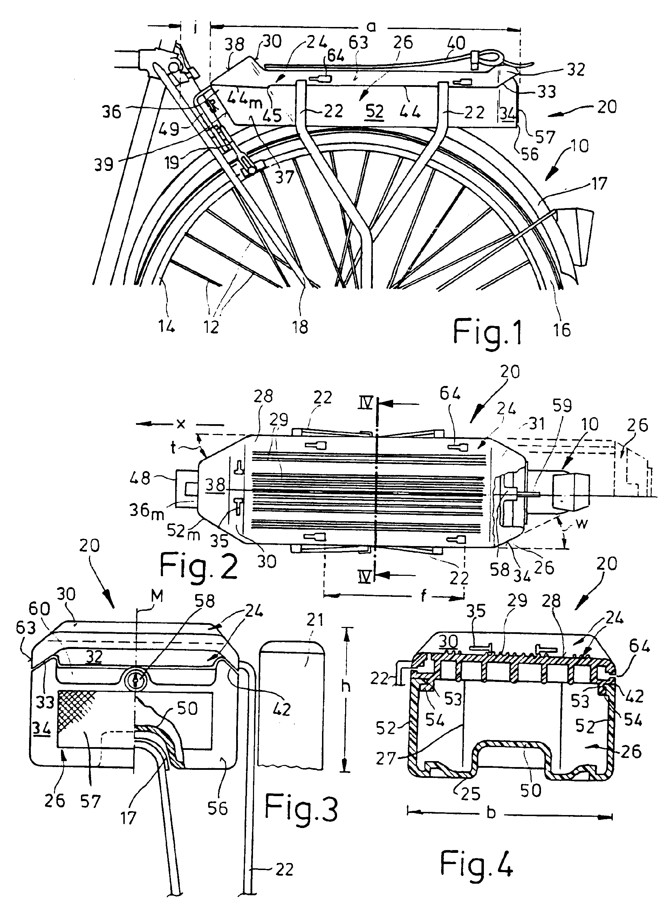

Fig. 1 zeigt einen Teil des Hinterrades 10 eines Fahrrades mit auf einer -- von Speichen 12 gehaltenen -- Felge 14 vorgesehenem Luftreifen 16, der von einem Schutzblech 17 überspannt und dem nahe einer Radgabel 18 eine Felgenbremse 19 zugeordnet ist.

Über dem Abschnitt des Schutzbleches 17 ist ein Gepäckträger 20 angeordnet. Dieser besteht i.w. aus einem auf zwei Metallbügeln 22 runden oder rechteckigen Querschnitts festgelegten Deckel 24 sowie einer letzteren zu einem quaderartigen Körper -- in gewähltem Ausführungsbeispiel; einer Gesamtlänge a von 440 mm, einer Höhe h von etwas mehr als 80 mm und einer Breite b von etwa 140 mm -- ergänzenden Wanne 26, die in Fahrtrichtung x am Deckel 24 verschiebbar ist.

Der Deckel 24 ist ein Werkstoff-Formteil mit einer Auflagefläche 28, von der in Fahrtrichtung x verlaufende Rippen 29 aufragen und die an beiden Enden in pultartig nach außen sowie aufwärts geneigte Endflächen 30, 31 übergeht. Die heckwärtige Endfläche 31 ist Teil eines gewölbten Querwulstes 32, der beispielsweise in Fig. 1 deutlich erkennbar und mit ebenfalls geneigten Unterkanten 33 versehen ist.

In Draufsicht verjüngt sich der Endwulst 32 -- und mit ihm der Körper des Gepäckträgers 20 -- entsprechend an zwei Heckseitenflächen 34 der Wanne 26 in einem Winkel w von etwa 15°.

Auch der in Fahrtrichtung x vordere Bug 36 des Gepäckträgers 20 verjüngt sich in Draufsicht gemäß Fig. 2 nach vorne hin -- oberhalb entsprechender Bugseitenflächen 37 der Wanne 26 -- in einen Winkel t von etwa 20°.

An die Pultfläche 30 des Buges 36 schließt eine flache und nach vorn geneigte Frontfläche 38 an, die mit einer nach unten geneigten Bugunterfläche 39 an einen Buggrad 36m stößt. In der Pultfläche 30 sind zwei Schlitze 35 parallel zur Auflagefläche 28 angedeutet, in welche die Enden von Zurriemen 40 eingesetzt sind. Diese verschließen die Schlitze 35 dicht.

Die untere -- einen in Fig. 4 deutlich erkennbaren Trennspalt 42 zwischen Deckel 24 und Wanne 26 begrenzende -- Deckelkontur 44 ist unterhalb der Pultfläche 30 bei 45 schulterartig zu einem Anschlag nach unten versetzt (Abschnitt 44m), der die Schubbewegung der Wanne 26 nach vorn begrenzt. Außerdem ist am Bug 36 des Deckels 24 ein Winkeleisen 48 erkennbar, dessen freier Schenkel 49 zum Festlegen an der Radgabel 18 in einem Abstand i von beispielsweise 30 bis 40 mm dient. Im Winkeleisen 48 sind Löcher -- gegebenenfalls auch Langlöcher -- für den Einsatz von Schrauben vorgesehen.

5

Die Wanne 26 ist mit einer in ihrer Innenraum 27 einragenden mittigen Längseinformung 50 ihrer Bodenplatte 25 zur Aufnahme des Fahrradschutzbleches 17 (Fig. 3) ausgestattet sowie an ihren Seitenwänden 52 mit nach innen ragenden Kantennasenleisten 53, welche von an den Deckel 24 angeformten Führungsschienen 54 L-förmigen Querschnittes untergriffen und geführt sind.

Dieses Führungssystem 53/54 endet am Anschlag 45, von dem aus sich die Seitenwände 52 der Wanne 26 entsprechend der Deckelform bugwärts bis zu der etwa parallel zur Radgabel 18 geneigten Bugunterfläche 39 als die bereits genannten -- und bevorzugt leicht gewölbten -- Bugseitenflächen 37 fortsetzen.

In der die Wanne 26 nach hinten begrenzenden Heckfläche 56 ist ein verhältnismäßig großflächiger Rückstrahler 57 angebracht sowie über diesem in der vertikalen Achse M ein Zylinderschloß 58, dessen Schlüssel in Fig. 2 mit 59 bezeichnet ist. Ein Schloßriegel $58_a$ greift in Schließstellung in eine aus Gründen der Übersichtlichkeit nicht wiedergegebene Ausnehmung des Deckels 24 blockierend ein. Beidseits des Zylinderschlosses 58 erstreckt sich unterhalb des Querwulstes 36 eine Griffmulde 60 des Deckels 24, eine Griffmulde der Wanne 26 ist bei 61 angedeutet.

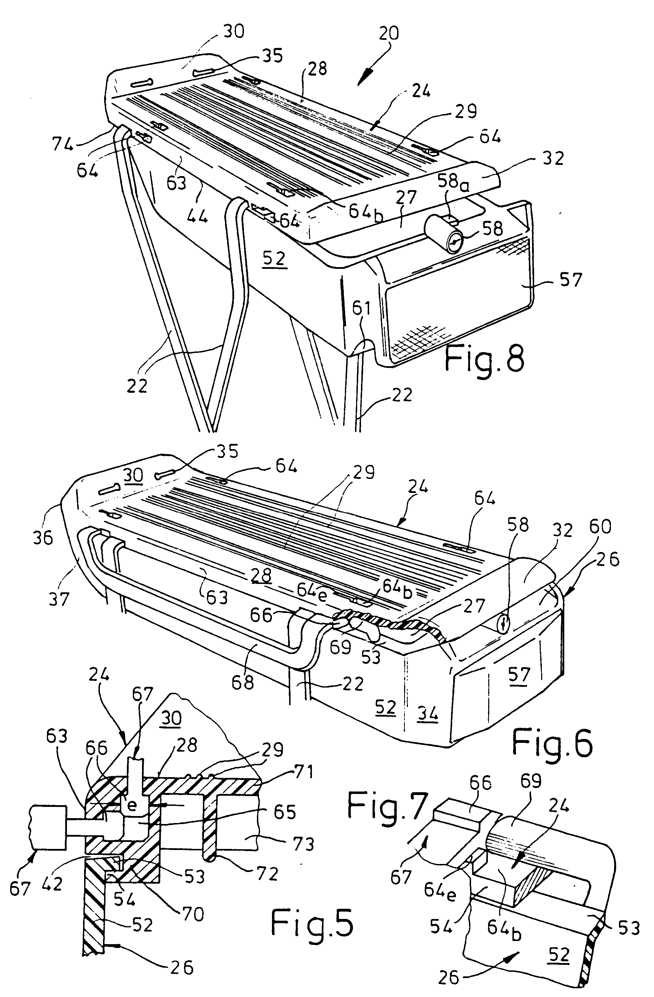

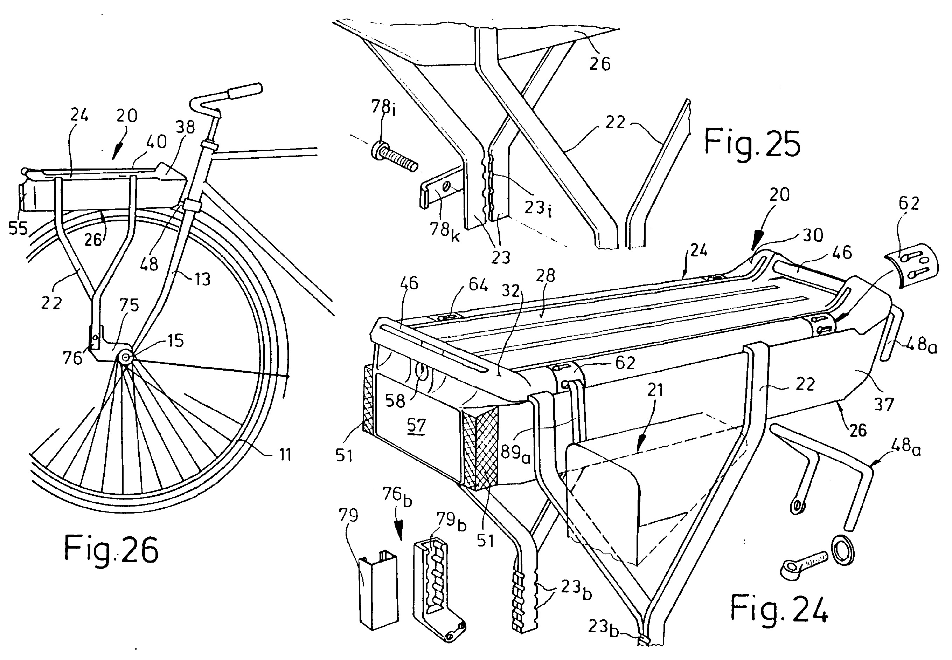

Sowohl in der Auflagefläche 28 als auch den Seitenflächen 63 des Deckels 24 sind in einem Abstand f voneinander jeweils zwei -- in Draufsicht etwa T-förmige bzw. schlüssellochartige -- Anschlußlöcher 64 in den Kunststoff des Deckels 24 eingeformt oder -- in Fig. 24 durch einen Metalleinsatz 62 angedeutet -- als Ansatzteile vorgesehen; in den breiten Abschnitt $64_b$ jedes Anschlußloches 64 ist das Riegelende 66 eines seinerseits querschnittlich T-förmigen Anschlußkörpers 67 einsetzbar (Fig. 5), wobei die Länge e des Riegelendes 66 etwa der Höhe jenes breiten Abschnittes $64_b$ entspricht, an den ein enger Schlitzteil $64_e$ jenes Anschlußloches 64 anschließt.

Nach geringfügigem Verschieben des Anschlußkörpers 67 in Fahrtrichtung x hintergreift dessen breites Riegelende 66 -- beispielsweise das freie Ende einer in ein Paar von Anschlußlöchern 64 gemäß Fig. 6 eingesetzten Tragstange 68 -- die Wände des engen Schlitzteils $64_e$; dieses ist als hinterschnittene Nut ausgebildet.

Wie Fig. 5 erkennen läßt, sind jeweils ein Anschlußloch 64 von Auflagefläche 28 und ein entsprechendes der Seitenfläche 63 einander unter Bildung eines gemeinsamen Aufnahmeraumes 65 für Riegelenden 66 zugeordnet und zwar oberhalb der Führungsschiene 54 in einem breiten Werkstoffstreifen 70 des Deckels 24, an dessen -- die Auflagefläche 28 anbietenden -- Decke 71 Längsrippen 72 stabilisierend angeformt sind.

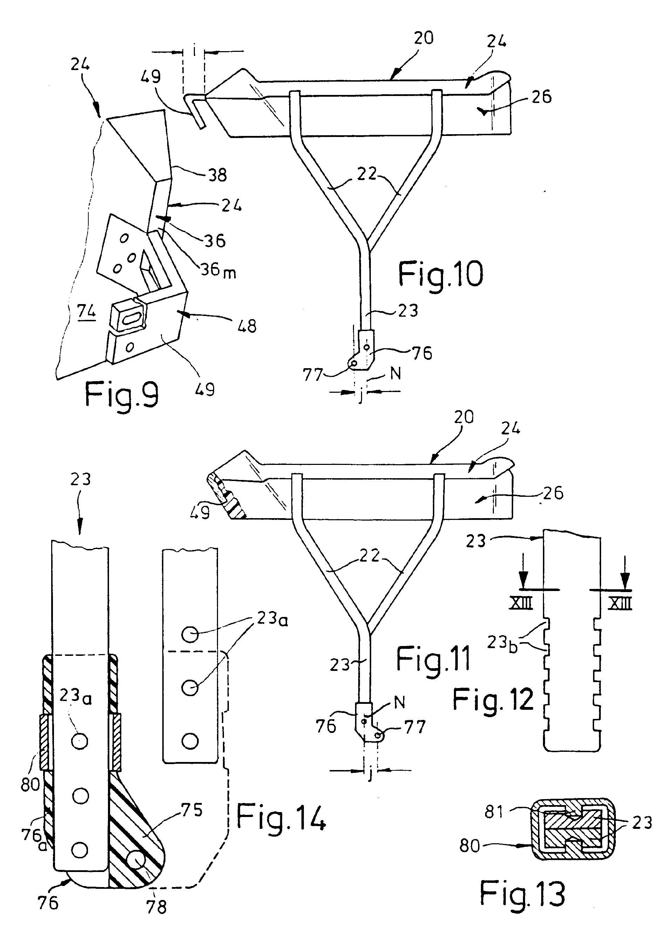

Diese gehen bugwärts in eine kompakte Platte 73 über, an deren bei geschlossenem Gepäckträger 20 nicht zugänglichen Unterseite 74 das Winkeleisen 48 entsprechend Fig. 9 befestigt ist.

Ist die Wanne 26 in ihre beispielsweise in Fig. 6 dargestellte Schließstellung eingeschoben, greift jeweils ein Schließbolzen 69 in jenen Aufnahmeraum 65 ein und endet am Schlitzteil $64_e$ vor einem gegebenenfalls darin ruhenden Riegelzapfen 66 - letzteres ist nun unverrückbar festgelegt; die Entnahme der Anschlußorgane 67 ist nur bei geöffneter Wanne 26 möglich.

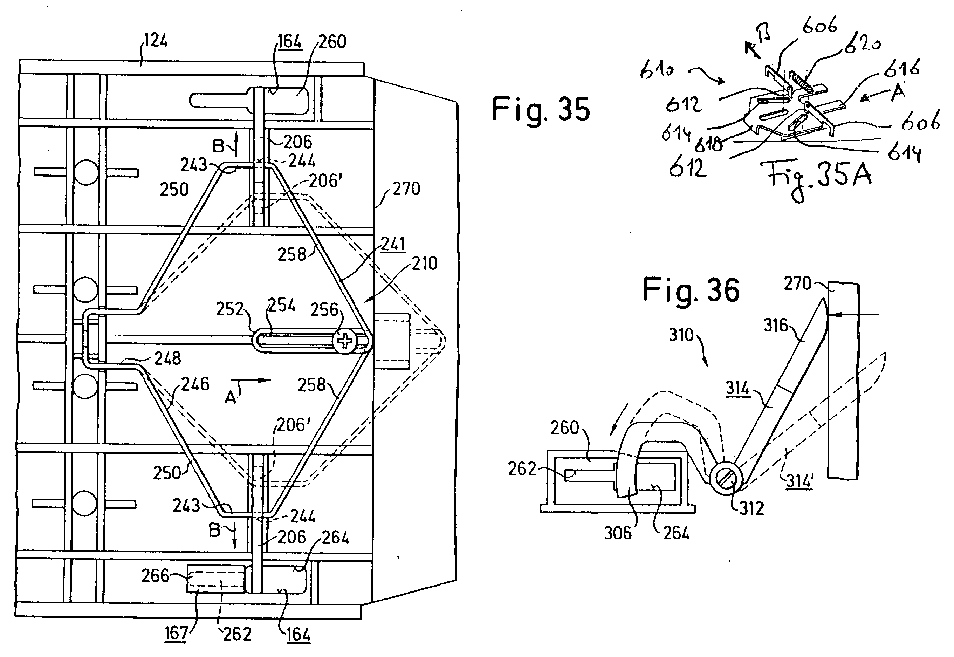

Jene Schließbolzen 69 können voneinander unabhängig einsetzbar bzw. entfernbar sein, was besondere Handhabungsvorteile bietet. Besonders bevorzugt ist es, die beiden Schließbolzen 69 starr mit der Wanne 26 zu verbinden, so daß sich bei eingeschobener Wanne 26 eine selbsttätige Verriegelung des jeweiligen Anschlußkörpers 67 (Seitentasche, oben aufgesetzter Kindersitz oder dergl.) ergibt. durch Betätigen des Zylinderschlosses 58 kann dann die Wanne 26 in ihrer Einschubstellung (= Schließstellung) sperrend festgelegt werden und damit gleichzeitig auch die Anschlußkörper 67. Nach dem Entriegeln des Zylinderschlosses 58 kann dann die Wanne 26 wahlweise wieder ausgezogen werden mit gleichzeitiger Entriegelung der Anschlußkörper 67. Die Seitentasche 21 bzw. der Kindersitz ist aufgrund der Langloch-Verbindung noch weiterhin am Gepäckträger festgelegt, da zum Entfernen der Seitentasche bzw. des Kindersitzes oder dergl. eine Bewegung in Längsrichtung des jeweiligen schlüssellochartigen Anschlußlochs (hier parallel zur Fahrzeug-Längsrichtung) erforderlich ist mit nachfolgender Aushebe-Bewegung des jeweiligen Anschlußkörpers 67 aus dem Anschlußloch 64. Nachfolgend werden noch an Hand der Figuren 35 und 36 zwei weitere Ausführungsformen der Schließeinrichtung für die Anschlußlöcher 64 erläutert.

Die Fig. 10, 11 verdeutlichen, daß der Gepäckträger 20 ohne weiteres im Abstand i zur Radgabel 18 (Fig. 10) oder unmittelbar an diese montiert werden kann. Im letztgenannten Fall liegt der lange Schenkel 49 des Winkeleisens 48 der Wanne 26 direkt, also lose, an. Die beiden gebogenen Metallbügel 22 jeder Trägerseite sind im Bereich ihrer aneinanderliegenden Steckenden 23 zusammengeführt sowie durch einen in Seitenansicht L-förmigen Steckschuh 76 zusammengefaßt; letzterer weist ein im Abstand j zur Mittelachse N des Metallbügels 22 exzentrisches Loch 77 auf, dank dessen der Steckschuh 76 mit einer Schraube 78 im Nabenbereich des Fahrrades festgelegt wird. Dieser Abstand j entspricht der Hälfte der Kraglänge i des Winkeleisens 49, was die Montage erheblich vereinfacht. Falls nämlich keine Hinterrad-Felgenbremse 19 (s.Fig. 1) vorgesehen ist (z.B. bei Rücktritt-Fahrradnaben), erfolgt zweckmäßigerweise eine unmittelbare Befestigung des Gepäckträgers 20 am Fahrrad, insbesondere an der sogenannten Pletscher-Platte, im Bereich der Radgabel 18. Bei Verwendung eines abstandsveränderlichen Zwischenstücks, beispielsweise des Winkeleisens 49, wird dieses in seine gepäckträgernahe Stellung gebracht (Fig. 11) und an der Pletscher-Platte fixiert. Der Steckschuh 76 wird dabei in der in Fig. 11 dargestellten Stellung aufgesteckt, also mit gegenüber der Mittelachse N nach hinten versetztem Loch 77.

Ist dagegen eine Felgenbremse 19 gemäß Fig. 1 vorgesehen, so muß der Gepäckträger um einen Horizontalabstand i nach rückwärts versetzt am Zweiradfahrzeug montiert werden, damit zwischen Radgabel 18 und eingeschobener Wanne 26 ausreichend Platz für die Felgenbremse 19 ist. Das Winkeleisen 49 wird hierzu in seiner gerade um diesen Abstand i versetzten, gepäckträgerfernen Position am Deckel 24 montiert. Hier wird der Steckschuh 76 in einer um 180° um die Mittelachse N verdrehten Stellung an die Steckenden 23 aufgesteckt (Fig. 10), so daß nunmehr das Loch 77 um den Abstand j vor der Mittelachse N liegt. Gegenüber der Grundfiguration in Fig. 11 ergibt sich eine Verlagerung des Lochs 77 um insgesamt 2j = i in Bezug auf die Mittelachse N. Dies entspricht dem gewünschten Maß.

Der Steckschuh 76 der in Fig. 13, 14 dargestellten Ausführung weist ein Rohrteil $76_a$ rechteckigen Qeurschnittes sowie -- damit einstückig -- eine seitliche Fahne 75 aus Vollmaterial (Kunststoffspritzguß) auf. Mit 80 ist ein ringartiges Einsatzstück aus Metall mit nach innen gerichteten Noppen 81 bezeichnet, die in entsprechende Ausnehmungen $23_a$ der Steckenden 23 einsetzbar sind und deren Längenverstellung ermöglichen. Das Einsatzstück kann, wie in Fig. 14 gezeigt, über das Rohrteil 76a geschoben und dort aufgerastet werden; alternativ hierzu kann das Einsatzstück auch in das Innere des entsprechend überdimensioniert auszubildenden Rohrteils 76 von oben her eingesteckt werden. Zur Längenanpassung (und zum Aufrasten) kann das ringartig geschlossene Einsatzstück 80 entgegen Federkraft in der einen oder anderen Richtung momentan elastisch aufgeweitet werden; das Einsatzstück 80 kann jedoch auch geschlitzt ausgebildet sein, wobei dann entweder ausreichend stark zurückfedernder Federstrahl einzusetzen ist oder durch eine Schraubverbindung oder Schellenanordnung für zuverlässigen Zusammenhalt der Anordnung zu sorgen ist.

Bei einer anderen Ausführung sind gemäß Fig. 12 an den Steckenden 23 seitliche Kerben 23b für entsprechend angeordnete Noppen 81 angeordnet.

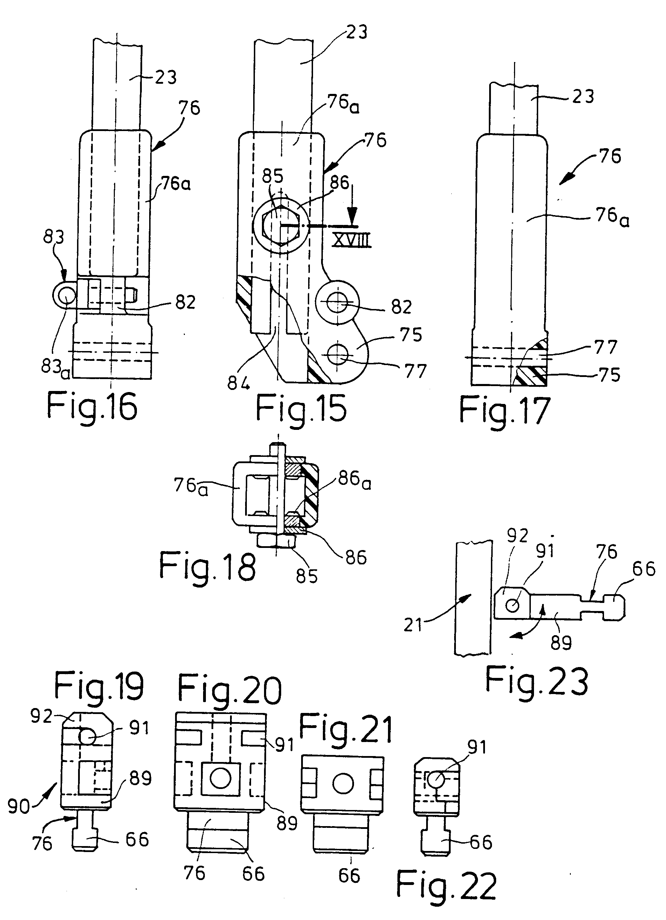

Ein anderer Schuh 76 ist gemäß Fig. 15 bis 18 mit einem oberhalb des Loches 77 eingeformten Anschlußauge 82 für eine nicht erkennbare Schutzblechstrebe versehen; leztere wird mittels einer ein Querloch $83_a$ anbietenden Spezialschraube 83 festgelegt. Statt der Ausnehmungen $23_a$ ist hier im Steckende 23 ein Langloch 84 vorhanden, das von einer -- auch den Rohrteil $76_a$ durchsetzenden -- Stellschraube 85 im Bereich eines gezahnten Druckeinsatzes 86 aus Stahl durchgriffen wird. Der Druckeinsatz 86 bzw. dessen Zähne $86_a$ schneidet/schneiden sich in den weicheren Werkstoff, bevorzugt eine Leichtmetallegierung, des Metallbügels 22 ein, und zwar in beliebiger Längenposition der Steckenden 23. Dies ermöglicht bei baulich geringem Aufwand eine einfache und schnell durchzuführende stufenlose Höheneinstellung des Gepäckträgers.

Beispiele für Anschlußorgane zeigen die Figuren 19 ff. Im Gegensatz zu den bereits beschriebenen Enden der Tragstange 68 für eine seitliche Packtasche 21 od.dgl., kann letztere auch unmittelbar mit einem Paar gesonderter Gußkörper 90 als Anschlußorgane ausgerüstet sein, die im Abstand f der Packtasche 21 od.dgl. festgelegt sind. Dieser Gußkörper 90 besteht aus dem Anschlußorgan 76 mit Riegelzapfen 66, einem anschließenden Sockelstück 89 und einem mittels einer Achse 91 angelenkten Befestigungsteil 92, das mit der Packtasche 21 od. dgl. verbunden wird.

Der Gußkörper 90 ist länglich und flach dargestellt, kann aber auch runden Querschnitt besitzen. Er wird mittels Schrauben beispielsweise so an der Packtasche 21 oder einem entsprechenden Zusatzteil festgelegt, daß der schwenkbare Riegelzapfen 66 in eine der beschriebenen Anschlußlöcher 64 eingesetzt zu werden vermag.

Bei nicht wiedergegebenen Ausführungen kann das Sockelstück als Gewindezapfen ausgebildet und an dem Zusatzteil angeschraubt werden. Auch ist vorgesehen, die Riegelzapfen 66 an das Ende eines in Fig. 24 bei $89_a$ angedeuteten Verlängerungsarmes anzuordnen.

Beim Ausführungsbeispiel der Fig. 24 ist sowohl am Querwulst 32 als auch im Bereich der Pultfläche 30 eine angeformte Eingriffleiste 46 zu erkennen. Statt des Winkeleisens 48 erfolgt hier die bugseitige Festlegung mittels eines einerseits in den Deckel 24 eingesetzten Winkelbügels 48a. Die Steckenden 23 der Metallbügel 22 -- die in Sonderfällen auch am Kunststoff geformt sein können -- sind in bereits beschriebener Weise mit seitlichen Außenrillen $23_b$ ausgestattet. Der entsprechende schuh $76_b$ nimmt die Steckenden 23 in seinem seitlich offenen Innenraum $79_b$ auf, der dann mittels eines Schubdeckels 79 verschlossen wird.

In Fig. 25 sind an den Steckenden 23 Innenrillen $23_i$ zur Aufnahme einer Schraube $78_i$ vorgesehen, die mit ihrem freien Ende an der Radgabel 18 od.dgl. festliegt und zudem eine die Steckenden 23 lösbar verbindende Auflageklammer $78_k$ hält.

Der Gepäckträger 20 ist auch zur Festlegung an einem Vorderrad 11 bzw. an der Lenkergabel 13 eines Fahrrades od. dgl. geeignet und nimmt in diesem Fall statt des Rückstrahlers 57 einen Scheinwerfer 55 auf, dessen Elektroanschlüsse in der Zeichnung vernachlässigt sind (Fig. 26). Die Metallbügel 22 sind mit einer Steckschuhfahne 75 an die Radnabe 15 angeschlossen.

Sowohl bei der letztbeschriebenen Version als auch bei heckwärtigem Gepäckträger 20 können Blinkleuchten 51 vorgesehen werden, die in Fig. 24 dargestellt sind. Die gegebenenfalls dafür sowie für eine Verwendung als Standlicht erforderliche Elektronik kann problemlos im Deckel 24 untergebracht werden.

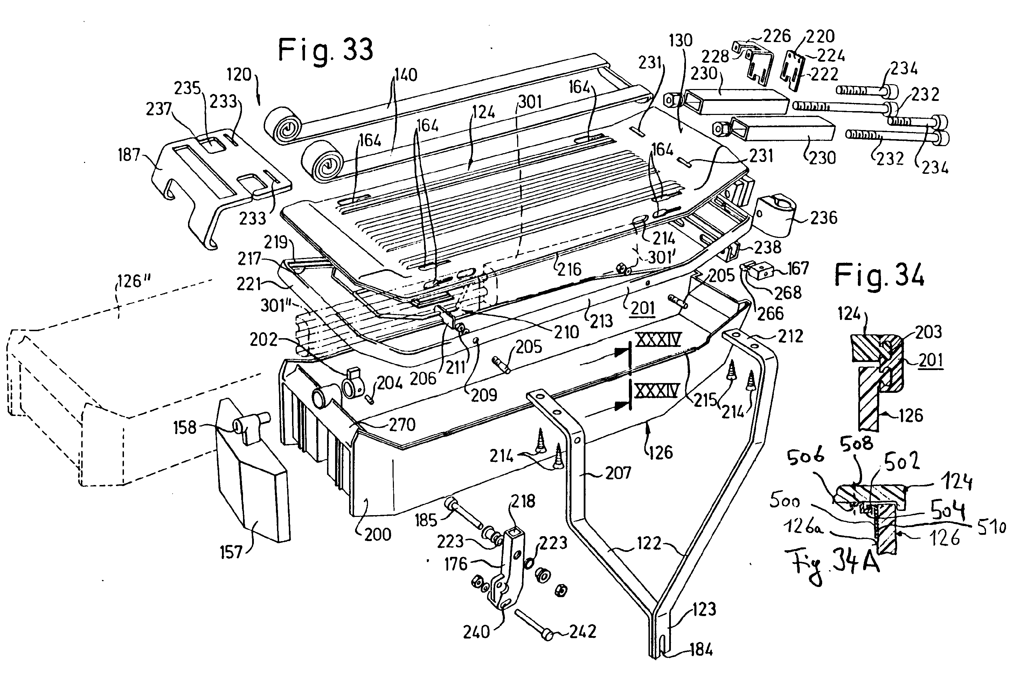

Zum lösbaren Festlegen der als Gummibänder ausgebildeten und an der Pultfläche 30 gehaltenen Zurriemen 40 ist am Querwulst 32 ein Griffstück 87 angeordnet mit Querstegen $87_a$ für die Zurriemen 40. Dieses Griffstück 87 hintergreift mit Gegenhaken 88 die Unterkante $32_a$ jenes Querwulstes 32 und ist davon leicht trennbar, so daß auch aufliegende Lasten 91a größeren Umfanges problemlos festgezurrt werden können (Fig. 32). Eine Gegenzahnung 92a an den einander zugekehrten Zurriemenflächen erleichtert die Längsverstellung der Zurriemen 40.

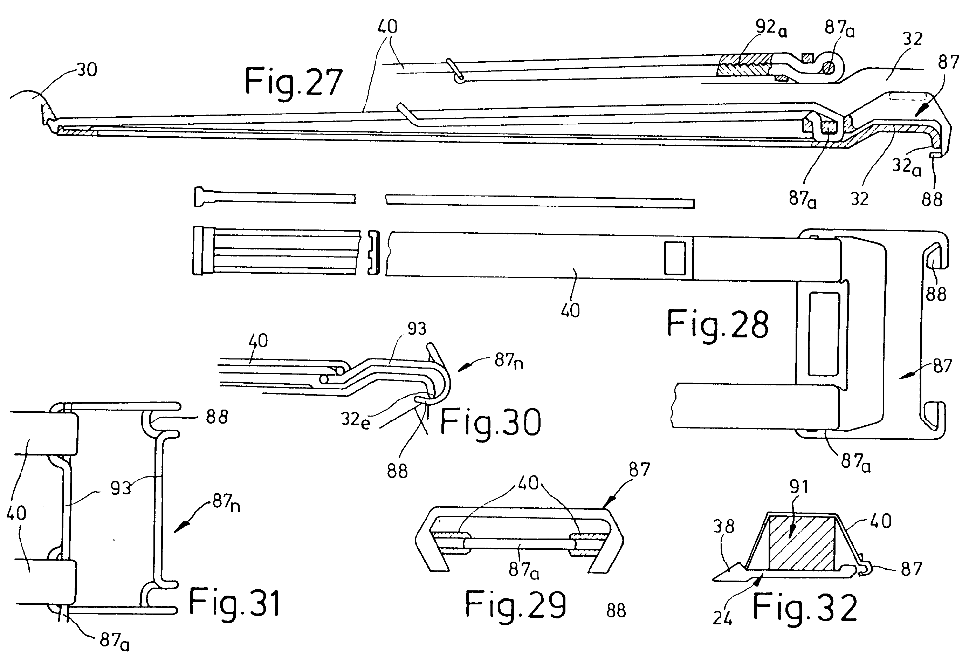

Eine einfachere Ausgestaltung des Griffstückes ist in Fig. 30, 31 mit $87_n$ bezeichnet, ein aus Draht gebogener Federbügel 93 bietet sowohl die Querstege $87_a$ an als auch die Gegenhaken 88.

Fig. 33 zeigt eine weitere Ausführungsform 120 des Gepäckträgers, wobei Bauelemente, die ihrer Funktion nach solchen in den vorhergehenden Figuren entsprechen, mit denselben Bezugsziffern, jeweils vermehrt um die Zahl 100, versehen sind.

Man erkennt die Wanne 126, an deren in Fig. 33 erkennbaren rückwertigen Ende der Rückstrahler 157 (oder ein Rücklicht bzw. ein Scheinwerfer bei Montage des Gepäckträgers am Vorderrad) anzubringen ist. Wie in Fig. 24 angedeutet, kann an der in Fig. 33 mit 200 bezeichneten, schräg nach hinten und innen verlaufenden Seitenfläche eine von zwei Blinkleuchten angebracht werden. Das Zylinderschloß 158 ist beim Zusammenbau mit einem innerhalb der Wanne 126 angedeuteten Schwenkriegel 202 mittels Splint 204 zu verbinden.

Der Deckel 124 ist mit den insgesamt vier Paaren aus jeweils zwei Anschlußlöchern 164 versehen, wobei die beiden hinteren Paare durch jeweils ein einzelnes Schließteil 206 einer im folgenden an Hand der Fig. 35 noch näher zu erläuternden Schließeinrichtung 210 wahlweise absperrbar sind. Bei Zusatzeinrichtungen, wie Seitentaschen 21 oder Kindersitzen, die sowohl vordere als auch hintere Anschlußlöcher 164 benutzen, genügt es, beispielsweise die hinteren Anschlußlöcher mit dieser Sperreinrichtung zu versehen, da diese Zusatzeinrichtungen von vorneherein ausreichend biegesteif ausgebildet sind, so daß dasjeweilige Anschlußteil aus dem nicht gesicherten Anschlußloch nicht herausgehoben werden kann; alternativ oder zusätzlich können die entsprechenden Anschlußstücke auch gemäß Fig. 6 mit einem gesonderten steifen Bügel 68 miteinander verbunden sein.

Die beiden gebogenen Metallbügel 122 der beiden seitlichen Gestänge sind mit einem oberen, horizontal abgewinkelten Endstück 212 ausgebildet, mit welchem sie, nach Einstecken in ein entsprechendes Loch 164 am heruntergebogenen Seitenrand 216 des Deckels 124, mit diesem mittels Schrauben 214 festgeschraubt sind.

Die unteren Steckenden 123 beider Metallbügel 122 sind, aneinandergelegt, in die Stecköffnung 218 des jeweiligen Steckschuhs 176 eingesteckt. Aufgrund des Langlochs 184 am Steckende 123 ergibt sich die Möglichkeit einer stufenlosen Höhenjustierung. Die in das Langloch 184 eingreifende Stellschraube 185 preßt beidseits an die Einsteckenden jeweils eine Zahnscheibe 223 (ähnlicher Aufbau wie in den Figuren 16 - 18), um in der gewählten Höhenposition eine zuverlässige Formschlußverbindung zu erreichen. Entsprechend Figuren 10 und 11 ist der Steckschuh 176 wahlweise in einer der beiden möglichen Orientierungen an den Metallbügeln 122 anbringbar. Zur Feinanpassung ist der Steckfuß mit einem horizontal verlaufenden Langloch 240 ausgebildet zur Aufnahme einer der Befestigung am Zweiradrahmen dienenden Schraube 242 (z.B. Radachse).

Zum Anschluß des vorderen Endes des Deckels 124 an der Hinterradgabel oder an der Pletscher-Platte bestehen eine Reihe weitere Möglichkeiten (an Stelle des Winkels 48 gemäß Figuren 9 und 10). In Fig. 33 recht oben erkennt man eine einfache Verbindungsplatte 220 zur unmittelbaren Montage an der Pletscher-Platte über nicht dargestellte Befestigungsschrauben, die in die beiden Langlöcher 222 der Platte 220 eingreifen. Entsprechende Befestigungsschrauben sind in die beiden oberen Löcher 224 einzustecken und mit dem Deckel 124 zu verschrauben. Im Falle der Verwendung einer Hinterrad-Felgenbremse wird an Stelle der Platte 220 ein Winkel 226 verwendet, der dementsprechend mit Langlöchern und Rundlöchern für die genannten Befestigungsschrauben ausgebildet ist sowie zusätzlich mit einer Ausnehmung 228 im oberen Schenkel zum Durchtritt des Seilzugs für die Felgenbremse.

Alternativ hierzu können auch Abstandshülsen 230 eingesetzt werden, die von dementsprechend langen Befestigungsschrauben 232 durchsetzt werden. In Fig. 33 sind ferner zwei kurze Befestigungsschrauben 234 abgebildet für den Fall der unmittelbaren Montage am Zweiradrahmen ohne Hinterrad-Felgenbremse.

In einer weiteren Befestigungsart wird der Deckel 124 über entsprechende Schellen 236 unmittelbar an den beiden Rohren der hinteren Radgabel festgelgt.

In Fig. 33 ist unterhalb des Deckels 124 an dessem rechten Ende ein Metall-U-Profil 238 angedeutet, welches an der Deckelinnenseite angebracht ist und als Widerlager für die Befestigungsschrauben (z.B. 232,234) dient. Dies entlastet den beispielsweise aus Kunststoff bestehenden Deckel 124 Daneben ist ferner erkennbar ein Anschlußkörper 167, der entsprechend dem Anschlußkörper 67 gemäß Figuren 5 bis 7, 22 und 23 Teil einer Seitentasche oder dergl. sein kann und über die schlüssellochartigen Anschlußlöcher 164 am Deckel 124 sperrend festgelegt werden kann.

Ferner erkennt man in Fig. 33 oben ein Gummiband (Zurrstrang) 140, welches durch zwei Schlitze 231 in der nach vorne und oben ansteigenden pultartigen Fläche 130 vom vorderen Ende des Deckels 124 geführt ist, so daß er dort zwischen den Löchern 231 entlang der Innenseite des Deckels 124 verläuft festgelegt ist. Die beiden freien Enden des Zurrstrangs 140 sind mehrfach auf das Griffstück 187 aufgewickelt mit Festlegung des äußersten Zurrstrangendes jeweils in einem Schlitz 233. Die mehrfachen Lagen der Aufwicklung durchsetzen jeweils eine rechteckige Durchtrittsöffnung 235 im Griffstück, die an ihrem hinteren Rand jeweils einen seitlich offenen Schlitz 237 aufweist. Dieser ermöglicht es, eine oder mehrere Lagen der Wicklung nacheinander abzuwickeln bzw. weitere Lagen aufzuwickeln, um auf diese Weise die effektive Länge des Gummibands (Zurrstrang) 140 wahlweise zu verändern. Auf diese Weise können auch große Gegenstände ohne allzu große Zugkraft am Gepäckträger 120 festgelegt werden.

Wie insbesondere Fig. 34 zeigt, ist die Wanne 126 über eine Profilschiene 201 am Deckel 124 verschiebbar gelagert. Die Profilschiene 201 entspricht im Querschnitt einem Doppel-C-Profil, in deren obere Profilhälfte der entsprechend ausgebildete Umfangsrand 203 des Deckels 124 formschlüssig eingesteckt ist. Wie Fig. 33 zeigt läuft die Profilschiene 201 entlang des gesamten Außenumfangs des Deckels 124. Sie sorgt auf diese Weise für mechanische Verstärkung des von einem Kunststoffteil gebildeten Deckels 124 bei ansprechendem Äußeren. Zur sicheren Übertragung der Kräfte vom Deckel 124 auf das Gestänge sind die Metallbügel 122 unmittelbar mit der Profilschiene 201 verkoppelt, insbesondere mittels in Fig. 33 angedeuteter Gewindebolzen 205, die nach außen hin praktisch unsichtbar knapp unterhalb des abgewinkelten Endstücks 212 parallel zu diesem am anschließenden Vertikalschenkel 207 des jeweiligen Metallbügels 122 festgeschweißt sind und nach dem Zusammenbau ein entsprechendes Loch 209 in der Profilschiene 201 durchsetzen und über anschließend aufgeschraubte Schraubmuttern 211 starr mit der Profilschiene 201 verbunden sind.

Die untere Hälfte des Doppel-C-Profils dient im Bereich der beiden einander gegenüberliegenden, zur Fahrtrichtung parallelen Längsseitenabschnitte 213 der Profilschiene 201 der Führung des entsprechend geformten Wannenrandes 215 der Wanne 126. Zum Herausleiten bzw. Hineinleiten des Wannenrands 215 ist am hinteren Ende des jeweiligen Längsseitenabschnitts 213 eine das untere C-Profil fortsetzende Ausfräsung 217 ausgebildet. In diesem Bereich schließt sich an den horizontal verlaufenen Längsseitenabschnitt 213 ein kurzer, nach oben und hinten geneigter Abschnitt 219 der Profilschiene 201 an, der dann in den zur Fahrtrichtung senkrechten und horizontal verlaufenden Hinterrandabschnitt 221 der Profilschiene 201 übergeht.

In einer weiteren, in Fig. 33 lediglich mit unterbrochener Umrißlinie angedeuteten Ausführungsform der Erfindung, ist an beiden Längsseiten des Gepäckträgers 210 jeweils eine Führungsschiene 301 vorgesehen, an welcher sowohl der Deckel 124 als auch die Wanne 126 längsverschiebbar geführt sind. Dies ermöglicht einen teleskopartigen Auszug der Wanne. In Fig. 33 ist mit strichlierter Umrißlinie die Position 301′ der Führungsschiene 301 bei eingeschobener Wanne angedeutet und mit einer Strich-Punkt-Linie der Position 301″ bei in ihre äußerste Auszugsstellung 126″ ausgefahrener Wanne 126. Entsprechende Bewegungsanschläge sorgen dafür, daß die Wanne sowie die Führungsschienen 301 nicht weiter ausgezogen werden können.

Gemäß Fig. 34A kann die Wanne 126 an ihrer Innenseite 126a mit einer Winkelprofilschiene 500 versehen sein, deren oberer Schenkel 502 nach innen absteht. Die Schiene 500 erstreckt sich lediglich entlang der beiden Wannenlängsränder und sorgt hier für eine Aussteifung der Wanne. Der Schenkel 502 wird von einem dementsprechend nach außen gerichteten Schenkel 504 einer Winkelprofil-Gegenschiene 506 untergriffen. Die im Querschnitt Z-förmige Schiene 506 ist an der Unterseite des Deckels 124 angebracht. Die Schiene 500 hat im wesentlichen L-Profilquerschnitt.

Die Schiene 506 kann mit dem Deckel verschraubt sein, was durch eine unterbrochene Linie 508 angedeutet ist. Der Vertikalschenkel 510 der Schiene 500 kann in nicht dargestellter Weise mit nach unten abstehenden Zacken ausgebildet sein, um den Zusammenhalt der an die Wanneninnenseite bei der Fertigung eingepreßten Schiene 500 mit dem Wannenkorpus zu verbessern. Bei dieser Ausführungsform entfällt die umlaufende Profilschiene 201.

Fig. 35 zeigt die Schließeinrichtung 210 an der Unterseite des Deckels 124 mit näheren Details. Man erkennt einen Federbügel 240 in Form einer geschlossenen Schleife. Zwei relativ kurze, zur Ausschubrichtung A der Wanne 128 parallel verlaufende, einander in gleicher Höhe gegenüberliegende Seitenschenkel 242 sind jeweils mit einem der beiden schieberartigen Schließteile 206 bewegungsverkoppelt, und zwar dadurch, daß diese beiden Seitenschenkel 242 jeweils ein entsprechendes Loch 244 des Schließteils 206 durchsetzen. Die beiden Schließteile 206 sind in nicht näher dargestellter Weise linear geführt mit Bewegungsrichtung B parallel zur Deckelebene und senkrecht zur Ausschubrichtung A der Wanne 128.

Der in Bezug auf die Ausschubrichtung A hintere (in Bezug auf die Fahrtrichtung vordere), die beiden Seitenschenkel 242 verbindende Verbindungsschenkel 246 ist im Bereich seiner Längenmitte U-förmig abgewinkelt (Abschnitt 248) und mit diesem Abschnitt an der Deckelunterseite in nicht näher dargestellter Weise festgelegt (z.B. festgeschraubt). Von diesem Abschnitt 248 laufen jeweils nach vorne (in Fahrtrichtung) und außen geneigte Abschnitte 250 zu den beiden Seitenschenkeln 244. Der andere (vordere) Verbindungsschenkel 250 weist im Bereich seiner Längenmitte eine Bügelschlaufe 252 auf, die ein zur Bewegungsrichtung A paralleles Langloch 254 bildet. In dieses Langloch 254 greift ein am Deckel 124 befestigter Führungsbolzen (Kopfschraube) 256 ein, um auf diese Weise den vorderen Verbindungsschenkel 250 sicher an der Deckelunterseite mit Bewegungsspiel parallel zur Richtung A festzulegen. Von der Federbügelschlaufe 252 laufen wiederum nach außen und hinten geneigte horizontale Abschnitte 258 zu den beiden Seitenschenkeln 242. Die Abschnitte 250 und 248 bilden demnach angenähert eine Raute.

Der Federbügel 240 nimmt ohne äußere Krafteinwirkung die in Fig. 35 strichliert angedeutete Form ein. Diese definiert die Öffnungsstellung der Schließeinrichtung 210, in welcher die beiden Schließteile 206 nach innen zurückgezogen sind (strichlierte Stellung 206'). In dieser Stellung sind sie aus dem Aufnahmeraum 260 innerhalb des Deckels 124 und unterhalb des jeweiligen Anschlußlochpaares herausgerückt. Es besteht daher die Möglichkeit, einen in Fig. 35 unten angedeuteten Anschlußkörper 167 aus dem Bereich des engen Lochabschnitts 262 heraus in den Bereich des weiten Lochabschnitts 264 zu verschieben (in Richtung A) und anschließend den innerhalb des Aufnahmeraums 260 befindlichen Kopf 266 durch den weiten Lochabschnitt 264 hindurch herauszuziehen. Wie auch Fig. 33 zeigt, sitzt der Kopf 266 an einem Hals 268. Die Kopfdicke (in Richtung B) entspricht im wesentlichen der gleich orientierten Weite des weiten Lochabschnitts 264; die gleich orientierte Dicke des Halses 268 entspricht im wesentlichen der gleich orientierten Weite des engen Lochabschnitts 262, woraus sich die gewünschte Schlüssel-Verbindungsart ergibt.

Wird nun die Wanne 128 eingeschoben, so schlägt kurz vor Erreichen der Einschubstellung die Wanne (mit ihrer schloßseitigen Rückwand 270) am Federbügel 246 an (im Bereich der Federbügelschlaufe 252). Bei weiterem Einschub wird der Federbügel zunehmend derart verformt, daß sich die beiden Verbindungsschenkel zunehmend einander nähern und in der Folge die beiden Seitenschenkel 242 zunehmend sich voneinander entfernen. Dementsprechend werden auch die beiden Schließteile 206 zunehmend nach außen in den jeweiligen Aufnahmeraum 260 geschoben, bis sie schließlich in Fig. 35 die mit durchgezogener Linie gezeigte Stellung einnehmen (Schließstellung der Schließeinrichtung 210 bei eingeschobener Wanne). Hierbei ergibt sich zwangsläufig eine gewisse Verschiebung der beiden Seitenschenkel 242 innerhalb der Durchgangslöcher 244 in den Schließteilen 206.

In besagter Stellung befinden sich die äußeren Enden der beiden Schließteile 206 im Bereich des dem engen Lochabschnitt 262 nächstgelegenen Endes des weiten Lochabschnitts 264 und verhindern so ein Lösen der Schlüssellochverbindung durch Verschieben des Anschlußkörpers aus dem engen Lochabschnitt zum weiten Lochabschnitt.

In Fig. 35A ist eine weitere, mit 610 bezeichnete Ausführungsform der Schließeinrichtung in explosionsartiger Darstellung angegeben. Man erkennt hier wiederum die beiden Schließteile 606, die in nicht näher dargestellter Weise an der Deckelunterseite in Richtung B verschiebbar gelagert sind. An ihrem inneren Ende greifen beide Schließteile 606 über einen nach unten abstehenden Vorsprung 612 jeweils in ein Langloch 614 eines als Kraftübertragungsteil dienenden Blechstanzteils 616 ein. Das Blechstanzteil 616 ist in nicht näher dargestellter Weise an der Deckelunterseite in Richtung A verschiebbar gelagert. Beide Langlöcher 614 laufen in Richtung A voneinander weg schräg nach außen. Falls im Laufe der Einschubbewegung der Wanne diese an das in Fig. 35A linke, nach unten abgewinkelte Ende 618 des Blechstanzteils 616 anschlägt, wird dieses aus der in Fig. 35A dargestellten Öffnungsposition nach rechts verschoben. Hierbei bewegen sich die beiden Schließteile 606 zwangsläufig nach außen in ihre jeweilige Schließstellung. Dies geschieht entgegen der Vorspannkraft einer die beiden inneren Enden der beiden Schließteile miteinander verbindenden Vorspannfeder 620. Beim Ausziehen der Schublade sorgt die Vorspannfeder 620 dafür, daß die beiden Schließteile 606 nach innen in ihre Freigabestellung zurückgezogen werden, wobei sich das Blechstanzteil dementsprechend in Fig. 35A nach links bewegt.

Um die Anschlußlöcher (z.b. 164 in Fig. 35) wasserdicht abzuschließen, können am Deckel 4 nicht dargestellte Verschlußdeckel angebracht sein, insbesondere durch Einsatz des Ultraschall-Schweißverfahrens.

Fig. 36 zeigt eine alternative, mit 310 bezeichnete Ausführungsform der Schließeinrichtung. Hier ist ein an der Deckelunterseite um eine Achse 312 schwenkbar gelagerter Doppelarmhebel 314 vorgesehen, dessen in Fig. 36 linker Arm hakenförmig gekrümmt und als Schließteil 306 dient. Der andere Arm 316 dient der Bewegungssteuerung. Auch hier geschieht dies durch Anschlag der Wanne, insbesondere der Wannenrückwand 270 am Ende der Einschubbewegung, so daß der Doppelarmhebel 314 aus seiner in Fig. 36 wiederum strichliert angedeuteten Ausgangsstellung 314' (in die er in nicht näher dargestellter Weise federvorgespannt ist) in die mit ausgezogener Linie dargestellte, der Schließstellung der Schließeinrichtung 310 entsprechende Drehstellung verschwenkt wird. In letzterer Stellung durchsetzt das Schließteil 306 (Hakenende) wiederum den Aufnahmeraum 260 derart, daß ein sich im engen Lochabschnitt befindlicher Anschlußkörper (nicht dargestellt) nicht in den weiten Lochabschnitt 264 verschoben werden kann. In der Ausgangsstellung dagegen ist das Schließteil 306 aus dem Aufnahmeraum 260 herausgezogen.

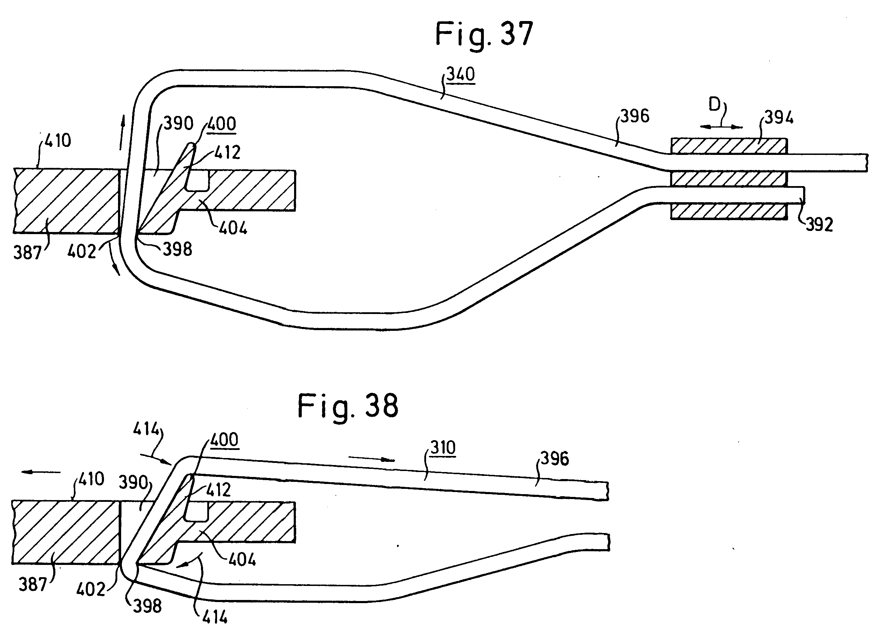

Die Figuren 37 und 38 zeigen eine weitere Art der Ausbildung von Zurrstrang 340 und Griffstück 387 mit der Möglichkeit einer einfachen und schnellen Veränderung der effektiven Zurrstranglänge (zwischen dem Befestigungspunkt am nicht dargestellten Deckel und dem Griffstück 387).

In der in Fig. 37 dargestellten Situation ist der Zurrstrang 340 relativ locker durch einen Schlitz 390 des Griffstücks 387 geführt und mit seinem freien Ende 392 über ein Verschiebeteil 394 festgelegt. Das Verschiebeteil 294 kann zur gewünschten Längenanpassung frei in Richtung des Doppelpfeils D entlang des Strangabschnitts 396 zwischen Deckel und Griffstück 387 geschoben werden. Dies ermöglicht fast eine Verdoppelung der ungedehnten Länge des Abschnitts 296.

Wird bei der jeweils gewählten Längeneinstellung Zug auf den Abschnitt 340 ausgeübt (indem an dem Griffstück 387 dementsprechend gezogen wird, z.B. um einen Gegenstand auf den Gepäckträger zu fixieren), so ergibt sich eine Art Selbsthemmung im Schlitz 390 für den Zurrstrang 340. Diese Selbsthemmung wird dadurch erreicht, daß der dem deckelseitigen Zurrstrangende näher gelegene Längsrand 398 des Schlitzes 390 von einer Klemmkante eines Klemmhebels 400 gebildet wird, der unter der Einwirkung der Zugkraft des Abschnitts 396 in Richtung zum gegenüberliegenden Längsrand 402 des Schlitzes 390 gedrückt wird.

Im dargestellten Ausführungsbeispiel ist der Klemmhebel 400 einstückig mit dem Griffstück 387 über eine filmscharnierähnliche Materialverengungsstelle 404 verbunden. Diese ermöglicht die gewünschte Schwenkbewegung des Schwenkhebels 400. Der Schwenkhebel 400 ist doppelarmähnlich ausgebildet, wobei der eine Arm schräg nach unten (in Richtung zum Deckel) und hin zum freien Griffende gerichtet ist und in die Klemmkante 398 ausläuft; der andere Arm verläuft in entgegengesetzter Richtung nach oben und ragt über die Oberseite 410 des Griffstücks 387 hinaus. Der über den Klemmhebel 400 geführte Zurrstrangabschnitt 296 versucht daher bei entsprechender Zugspannung den oberen Arm 412 des Doppelarmhebels 400 in Fig. 38 nach rechts zu verschwenken, woraus sich die gewünschte Kippbewegung um die Materialverengungsstelle 404 (Richtungspfeile 414) ergibt.


## Patentansprüche

1. Gepäckträger für Zweiradfahrzeuge, umfassend
   – einen sich am Zweiradfahrzeug abstützenden Deckel (Gepäckträgerplatte) (24), dessen Oberseite mit einer Auflagefläche zur Aufnahme von Lasten ausgebildet ist,
   – eine an dem Deckel (24) schubladenartig geführte Wanne (26),
   – wenigstens ein schlüssellochartiges Anschlußloch (64) im Deckel (24) zur lösbaren Anbringung einer Zusatzeinrichtung, insbesondere Seitentasche, Kindersitz, über jeweils einen an der Zusatzeinrichtung angebrachten Anschlußkörper (67),
   – eine Schließeinrichtung (210) zur Verriegelung der jeweiligen Zusatzeinrichtung am Gepäckträger mit einem Schließteil in Form eines Schließbolzens (69) für die Anschlußlöcher (64), welcher in einer Öffnungsstellung der Schließeinrichtung den weiten Lochabschnitt des Anschlußloches (64) freigibt zum Einsetzen bzw. Herausnehmen eines Anschlußkopfes des Anschlußkörpers (67) in einen bzw. aus dem Aufnahmeraum des Deckels unterhalb des Anschlußloches, und welcher in einer Schließstellung der Schließeinrichtung in den Aufnahmeraum einrückt zur Festlegung des Anschlußkörpers (67) im engen Lochabschnitt (262) des Anschlußloches (64),
   – ein Schließelement (58) zur sperrenden Festlegung der Wanne (26) in einer Einschubstellung am Deckel (24) und zur sperrenden Festlegung der Schließeinrichtung in ihrer Schließstellung,
   **dadurch gekennzeichnet,**
   daß die Wanne (26) starr mit dem Schließbolzen (69) verbunden ist, derart, daß die Wanne (26) bei Übergang in ihre Einschubstellung den Schließbolzen (69) in den Aufnahmeraum bewegt.

2. Gepäckträger für Zweiradfahrzeuge, umfassend
   – einen sich am Zweiradfahrzeug abstützenden Deckel (Gepäckträgerplatte) (124), dessen Oberseite mit einer Auflagefläche zur Aufnahme von Lasten ausgebildet ist,
   – eine an dem Deckel (124) schubladenartig geführte Wanne (126),
   – wenigstens ein schlüssellochartiges Anschlußloch (164) im Deckel (124) zur lösbaren Anbringung einer Zusatzeinrichtung, insbesondere Seitentasche, Kindersitz, über jeweils einen an der Zusatzeinrichtung angebrachten Anschlußkörper (167),
   – eine Schließeinrichtung (210) zur Verriegelung der jeweiligen Zusatzeinrichtung am Gepäckträger mit jeweils einem Schließteil (206) für die Anschlußlöcher (164), welches in einer Öffnungsstellung der Schließeinrichtung (210) den weiten Lochabschnitt (264) des Anschlußloches (164) freigibt zum Einsetzen bzw. Herausnehmen eines Anschlußkopfes (266) des Anschlußkörpers (167) in einen bzw. aus dem Aufnahmeraum (260) des Deckels unterhalb des Anschlußloches, und welches in einer Schließstellung der Schließeinrichtung (210;310) in den Aufnahmeraum (260) einrückt zur Festlegung des Anschlußkörpers (167) im engen Lochabschnitt (262) des Anschlußloches (164),

– ein Schließelement (158) zur sperrenden festlegung der Wanne (126) in einer Einschübstellung am Deckel (124) und zur sperrenden festlegung der Schließeinrichtung in ihrer Schließstellung,

**dadurch gekennzeichnet,**

daß die Schließeinrichtung ein am Deckel beweglich gelagertes Betätigungsteil umfaßt, an welches die Wanne (126) bei Annäherung an ihre Einschubstellung anschlägt zur Bewegung der Schließeinrichtung (210;310) in ihre Schließstellung bei Übergang der Wanne in ihre Einschubstellung.

3. Gepäckträger nach Anspruch 2, gekennzeichnet durch einen am Deckel (124) schwenkbar gelagerten Doppelarmhebel (314), dessen einer Arm als das Schließteil (306) ausgebildet ist und an dessen anderen Arm (316) die Wanne (126) bei der Annäherung an ihre Einschubstellung anschlägt zur Schwenkbewegung des Doppelarmhebels (314) in die Schließstellung des Schließteils (306).

4. Gepäckträger nach Anspruch 3, gekennzeichnet durch einen am Deckel (124) gehalterten Federbügel (240), welcher an das schwenkbewegliche oder linearbewegliche Schließteil (206) angreift, und an welchen die Wanne (126) bei Annäherung an ihre Einschubstellung anschlägt.

5. Gepäckträger nach Anspruch 4, dadurch gekennzeichnet, daß der Federbügel (240) im wesentlichen schleifenförmig ausgebildet ist, daß wenigstens einer zweier einander gegenüberliegender Seitenschenkel (242) des Federbügels (240) mit einem Schließteil (206) verkoppelt ist, daß einer (246) der beiden die Seitenschenkel (242) verbindenden Verbindungsschenkel (246,250) am Deckel (124) gehaltert ist, und daß die Wanne (126) bei Annäherung an ihre Einschubstellung an den anderen Verbindungsschenkel (250) anschlägt und ihn bei weiterer Bewegung auf ihre Einschubstellung zu in Richtung zum einen Verbindungsschenkel (246) drückt.

6. Gepäckträger nach Anspruch 5, dadurch gekennzeichnet, daß der andere Verbindungsschenkel (250) mit einer Zusatz-Federbügelschlaufe (252) ausgebildet ist, die ein zur Bewegungsrichtung (A) der Wanne (126) paralleles Langloch (254) bildet, und daß in das Langloch (254) ein am Deckel (124) befestigter Führungsbolzen (256) eingreift.

7. Gepäckträger für Zweiradfahrzeuge, nach einem der vorhergehenden Ansprüche
dadurch gekennzeichnet,
daß längs des Deckelrandes eine gesonderte Profilschiene (201) verläuft, und daß die zur Bewegungsrichtung der Wanne (126) parallelen Längsseiten-Abschnitte (213) der Profilschiene (201) als Führungsschiene für einen Rand (215) der Wanne (126) ausgebildet sind.

8. Gepäckträger nach Anspruch 7, dadurch gekennzeichnet, daß die längs des Deckebrandes im geschlossenes Schleife verlaufende Profilschiene (201) im Querschnitt einem Doppel-C-Profil entspricht mit jeweils einer Ausfräsung (217) im Bereich eines Endes der beiden Längsseitenabschnitte (213) zum Herausleiten des Wannenrandes (215) aus der Profilschiene (201).

9. Gepäckträger für Zweiradfahrzeuge, nach einem der vorhergehenden Ansprüche
dadurch gekennzeichnet,
daß an beiden zur Bewegungsrichtung der Wanne (126) parallelen Seiten des Gepäckträgers (120) jeweils eine Führungsschiene (301) vorgesehen ist, an welcher sowohl der Deckel (124) als auch die Wanne (126) längsverschiebbar geführt ist zum teleskopartigen Auszug der Wanne (126).

10. Gepäckträger für Zweiradfahrzeuge, nach einem der vorhergehenden Ansprüche
dadurch gekennzeichnet,
daß wenigstens ein Zurrstrang (140) zur Festlegung von Gegenständen auf der Auflagefläche des Deckels (124) vorgesehen ist, dessen eines Ende am Deckel (124) und dessen anderes Ende an einem Griffstück (128) angebracht ist, und daß die Zurrstranglänge zwischen Deckel (124) und Griffstück veränderbar ist.

11. Gepäckträger nach Anspruch 10, dadurch gekennzeichnet, daß das griffstückseitige Ende des Zurrstrangs (140) mit veränderbarer Anzahl von Windungen am Griffstück (128) festgelegt ist.

12. Gepäckträger nach Anspruch 11, dadurch gekennzeichnet, daß der Zurrstrang (340) durch einen Schlitz des Griffstücks (390) hindurchgeführt ist, dessen einer Schlitzrand (398) von einem am Griffstück (387) ausgebildeten Klemmhebel (400) gebildet ist zur klemmenden Fixierung des Zurrstrangs (340) in einer Klemmstellung des Klemmhebels (400).

13. Gepäckträger nach Anspruch 12, dadurch gekennzeichnet, daß der Klemmhebel (400) vom gespannten Zurrstrang (340) zwischen Griffstück (387) und Deckel in seine Klemmstellung bewegbar ist.

14. Gepäckträger nach Anspruch 13, dadurch gekennzeichnet, daß das freie griffstückseitige Zurrstrangende (392) am zurrstrang (340) zwischen Griffstück (387) und Deckel mittels eines Verschiebeteils (394) festlegbar ist.

15. Gepäckträger für Zweiradfahrzeuge nach einem der vorhergehenden Ansprüche, mit einem den Deckel (124) am Zweiradfahrzeug abstützenden Gestänge
dadurch gekennzeichnet,
daß das Gestänge einer Gepäckträgerlängsseite mittels eines Schuhs (76;176) zusammengefaßt und über diesen an einem Festpunkt des Zweiradfahrzeugs festlegbar ist, daß der Schuh mit einer Stecköffnung ausgebildet ist, um ein Steckende (23;123) des Gestänges in wahlweise unterschiedlichen Längspositionen aufzunehmen, daß die Stecköffnung exzentrisch zum Festpunkt angeordnet ist, und daß der Schuh (76; 176) wahlweise in einer von zwei um 180° um die Gestängelängsachse gegeneinander verdrehten Stellungen am Steckende (23; 123) des Gestänges aufsteckbar und am Festpunkt festlegbar ist.

16. Gepäckträger nach Anspruch 15, dadurch gekennzeichnet, daß der Gepäckträger (20;120) wahlweise in einer vorderen und einer hinteren Montageposition am Zweiradfahrzeug befestigbar ist, und daß Exzentrizität (j) des Schuhs (76;126) dem halben Abstand i zwischen beiden Montagepositionen entspricht.

17. Gepäckträger für Zweiradfahrzeuge, nach einem der vorhergehenden Ansprüche, dadurch gekennzeichnet, daß an beiden, zur Bewegungsrichtung der Wanne (126) parallelen Wannenrändern eine Windelprofilschiene (500) angebracht ist, die jeweils mit einer Winkelprofil-Gegenschiene (506) an der Unterseite des Deckels (124) als Wannenverschiebeführung zusammenwirkt (Fig. 34A).

18. Gepäckträger nach einem der Anspruch 2-17, dadurch gekennzeichnet, daß die Schließeinrichtung (610) ein am Deckel in Bewegungsrichtung der Wanne verschiebbar gelagertes, Kraftübertragungsteil umfaßt, welches über eine Kulissenführung an die quer zur Bewegungsrichtung der Wanne verschiebbar gelagerten Schließteile (606) angreift.

19. Gepäckträger nach Anspruch 18, dadurch gekennzeichnet, daß beide Schließteile (606) über eine Vorspannfeder (620) miteinander verbunden sind.

20. Gepäckträger nach einem der vorhergehenden Ansprüche, dadurch gekennzeichnet, daß Deckel (24) und Wanne (26) mit ihren Führungsschienen (54, 53) jeweils aus Kunststoff oder Leichtmetall geformt sind.

21. Gepäckträger nach einem der Ansprüche 15 bis 20, dadurch gekennzeichnet, daß das Gestänge (22) aus wenigstens einem U-förmigen Bügel besteht, dessen Schenkel beidseits des Fahrzeugrades (10, 11) verlaufen und deren Verbindungsstück im Deckel (24) festliegt.

22. Gepäckträger nach einem der vorhergehenden Ansprüche, dadurch gekennzeichnet, daß der Deckel (24) eine geschlossene Auflageplatte (71) mit dazu wannenwärtig rechtwinkeligen Rippen (72) sowie zwei Seitenflächen (63) ist, deren jeder ein zum Trägerinneren ragender Steg als Führungsschienen (54) angeformt ist.

23. Gepäckträger nach einem der vorhergehenden Ansprüche, dadurch gekennzeichnet, daß Deckel (24) und Wanne (26) zumindest zu einer Schmalseite hin sich in Draufsicht bugartig verjüngen.

24. Gepäckträger nach einem der vorhergehenden Ansprüche, dadurch gekennzeichnet, daß der Deckel (24) im Verjüngungsbereich eine von der Auflagefläche (28) aufragende geneigte Pultfläche (30) sowie eine dazu gegenläufige Frontfläche (38) aufweist.

25. Gepäckträger nach einem der vorhergehenden Ansprüche, dadurch gekennzeichnet, daß die Wanne (26) im Verjüngungsbereich eine bodenwärts geneigte Unterfläche (39) aufweist.

26. Gepäckträger nach einem der vorhergehenden Ansprüche, dadurch gekennzeichnet, daß der Deckel (24) etwa in Verlängerung seiner Pultfläche (30) in seiner unteren Deckelkontur einen Schulterabsatz (45) als Anschlag für eine entsprechende Stufung des Wannenrandes aufweist.

27. Gepäckträger mit an einer Schmalseite vorgesehenem winkelartigen Anschlußorgan zur Verbindung des einen Winkelschenkels mit einem aufragenden Teil des Zweiradfahrzeuges nach einem der vorhegehenden Ansprüche, gekennzeichnet durch ein am Deckel (24) austauschbar so festliegendes Anschlußorgan (48, 48$_a$), daß der an den aufragenden Teil anzuschließende Schenkel (49) etwa parallel zu diesem Teil verläuft und der Abstand des Schenkels von Deckel durch Austausch veränderbar ist.

28. Gepäckträger nach Anspruch 27, dadurch gekennzeichnet, daß die Verbindungsstelle Deckel (24) Anschlußorgan (48, 48$_a$) von der Wanne (26) abdeckbar angebracht ist.

29. Gepäckträger nach Ansprüch 27 oder 28, dadurch gekennzeichnet, daß das Anschlußorgan eine gewinkelte Fläche (48) oder ein entsprechend gebogener Bügel (48$_a$) ist.

30. Gepäckträger nach einem der vorhergehenden Ansprüche, dadurch gekennzeichnet, daß das bohzenförmige Schließteil (69) mit seinem Anschlagende parallel zum Wannenrand bzw. einer L-förmigen nach innen ragenden Leiste (53) der Wanne (26) verläuft.

31. Gepäckträger nach einem der vorhergehenden Ansprüche, dadurch gekennzeichnet, daß das Anschlußloch (64) in einem gesonderten Einsatzstück (62) vorgesehen ist, das in einer Ausnehmung des Deckels (24) lagert.

32. Gepäckträger nach einem der vorhergehenden Ansprüche, dadurch gekennzeichnet, daß an wenigstens einer Längskante des Deckels (24) zumindest zwei Anschlußlöcher in der Seitenfläche (63) und/oder in der Auflagefläche (28) vorgesehen sind.

33. Gepäckträger nach Ansprüche 32, dadurch gekennzeichnet, daß jeweils einem Anschlußloch (64) der Auflagerfläche (28) ein Anschlußloch (64) in der benachbarten Seitenfläche (63) des Deckels (24) zugeordnet ist.

34. Gepäckträger nach Ansprüche 32 oder 33, dadurch gekennzeichnet, daß dem Paar von Anschlußlöchern (64) ein gemeinsamer Aufnahmeraum (65) hinter der Seitenfläche (63) des Deckels (24) zugeordnet ist.

35. Gepäckträger nach einem der vorhergehenden Ansprüche, dadurch gekennzeichnet, daß im Deckel (24) Halteelemente (35, 37$_a$) für der Auflagefläche (28) auf dieser zugeordnete Zurrstränge (40) vorgesehen sind.

36. Gepäckträger nach Ansprüche 35, gekennzeichnet durch schlüssellochartige Schlitze (35) in der Pultfläche (30) oder Querstege (37$_a$) zur Aufnahme eines Zurrstranges (40).

37. Gepäckträger nach einem der vorhergehenden Ansprüche, dadurch gekennzeichnet, daß von der Auflagefläche (28) parallel und quer zu den Zurrsträngen (40) Rippen (29) geringer Höhe aufragen.

38. Gepäckträger nach einem der vorhergehenden Ansprüche, dadurch gekennzeichnet, daß die freien Enden der Zurrstränge (40) durch ein Griffstück (87) verbunden sind und dieses am Heckende des Deckels (24) einrastbar ausgebildet ist.

39. Gepäckträger nach Ansprüche 38, dadurch gekennzeichnet, daß das Griffstück (87) mit Hakenenden (38) ausgestattet ist, die Teil eines Federbügels (93) sind (Fig. 31).

40. Gepäckträger nach einem der vorhergehenden Ansprüche, dadurch gekennzeichnet, daß der Deckel (24) oberhalb des Wannenhecks wenigstens ein Grifforgan als Hohlwulst (32) oder Querleiste (46) aufweist.

41. Gepäckträger nach einem der vorhergehenden Ansprüche 1 bis 24, dadurch gekennzeichnet, daß die Wanne (26) heckwärts mit wenigstens einem Rückstrahler (57) und/oder einem Blinklicht (51) versehen ist.

42. Gepäckträger nach einem der vorhergehenden Ansprüche, dadurch gekennzeichnet, daß die Wanne (26)

14

EP 0 329 136 B1

heckwärts mit wenigstens einem Scheinwerfer (55) und/oder einem Blinklicht (51) versehen ist.

**Revendications**

1. Porte-bagages pour véhicules à deux roues, comportant
   – un couvercle (plateau porte-bagages) (24) prenant appui sur le véhicule à deux roues, dont la face supérieure est une surface d'appui destinée à recevoir des charges,
   – un bac (26) guidé à la manière d'un tiroir sur le couvercle (24),
   – au moins un trou de raccordement (64), à la manière d'un trou de serrure, pratiqué dans le couvercle (24) pour la mise en place amovible d'un accessoire, en particulier d'une poche latérale, d'un siège d'enfant, par un corps de raccordement (67) placé sur l'accessoire,
   – un dispositif de fermeture (210) pour verrouiller l'accessoire sur le porte-bagages avec un élément de fermeture sous la forme d'une tige de fermeture (69) pour les trous de raccordement (64), qui, en position d'ouverture du dispositif de fermeture, libère la partie large du trou de raccordement (64) pour insérer une tête de raccordement du corps de raccordement (67) dans un logement du couvercle ou pour l'extraire de celui-ci, au-dessous du trou de raccordement, et qui, dans une position de fermeture du dispositif de fermeture, s'engage dans le logement pour fixer le corps de raccordement (67) dans la partie de trou (262) étroite du trou de raccordement (64),
   – un élément de fermeture (58) pour la fixation bloquée du bac (26) dans une position insérée dans le couvercle (24) et pour la fixation bloquée du dispositif de fermeture dans sa position de fermeture, caractérisé en ce que le bac (26) est assemblé de manière rigide à la tige de fermeture (69), de manière que le bac (26) déplace la tige de fermeture (69) dans le logement, en passant dans sa position insérée.

2. Porte-bagages pour véhicules à deux roues, comportant
   – un couvercle (plateau porte-bagages) (124) prenant appui sur le véhicule à deux roues, dont la face supérieure est une surface d'appui destinée à recevoir des charges,
   – un bac (126) guidé à la manière d'un tiroir sur le couvercle (124),
   – au moins un trou de raccordement (164), à la manière d'un trou de serrure, pratiqué dans le couvercle (124) pour la mise en place amovible d'un accessoire, en particulier d'une poche latérale, d'un siège d'enfant, par un corps de raccordement (167) placé sur l'accessoire,
   – un dispositif de fermeture (210) pour verrouiller l'accessoire sur le porte-bagages avec un élément de fermeture (206) pour les trous de raccordement (164), qui en position d'ouverture du dispositif de fermeture (210), libère la partie large (264) du trou de raccordement (164) pour insérer une tête de raccordement (266) du corps de raccordement (167) dans un logement (260) du couvercle ou pour l'extraire de celui-ci, au-dessous du trou de raccordement, et qui, dans une position de fermeture du dispositif de fermeture (210 ; 310), s'engage dans le logement (260) pour fixer le corps de raccordement (167) dans la partie étroite (262) du trou de raccordement (164),
   – un élément de fermeture (158) pour la fixation bloquée du bac (126) dans une position insérée dans le couvercle (124) et pour la fixation bloquée du dispositif de fermeture dans sa position de fermeture, caractérisé en ce que le dispositif de fermeture comprend un élément d'actionnement monté mobile sur le couvercle, contre lequel vient buter le bac (126) s'approchant de sa position insérée, pour déplacer le dispositif de fermeture (210 ; 310) dans sa position de fermeture, lorsque le bac passe dans sa position insérée.

3. Porte-bagages selon la revendication 2, caractérisé par un levier à double bras (314) monté pivotant sur le couvercle (124) dont un bras constitue l'élément de fermeture (306) et dont l'autre bras (316) vient heurter le bac (126) s'approchant de sa position insérée, en vue du pivotement du levier à double bras (314) dans la position de fermeture de l'élément de fermeture (306).

4. Porte-bagages selon la revendication 3, caractérisé par un étrier formant ressort (240), maintenu sur le couvercle (124), qui agit sur l'élément de fermeture (206) déplaçable en pivotement ou déplaçable linéairement et contre lequel vient buter le bac (126) s'approchant de sa position insérée.

5. Porte-bagages selon la revendication 4, caractérisé en ce que l'étrier formant ressort (214) est à peu près en forme de boucle, en ce qu'au moins l'une de deux branches latérales (242) opposées l'une à l'autre de l'étrier formant ressort (240) est accouplée à un élément de fermeture (206), en ce que l'une (246) des deux branches de liaison (246, 250), assemblant les branches latérales (242), est maintenue contre

15

le couvercle (124) et en ce que le bac (126), s'approchant de sa position insérée, vient buter contre l'autre branche de liaison (250) et la presse, en continuant de se déplacer vers sa position insérée, vers une branche de liaison (246).

6. Porte-bagages selon la revendication 5, caractérisé en ce que l'autre branche de liaison (250) est conçue avec une boucle d'étrier formant ressort supplémentaire (252) qui forme un trou allongé (254), parallèle à la direction de déplacement (A) du bac (126) et en ce que dans le trou allongé (250) s'engage une tige de guidage (256) fixée sur le couvercle (124).

7. Porte-bagages pour véhicules à deux roues selon l'une des revendications précédentes, caractérisé en ce que le long du bord de couvercle s'étend un rail profilé (201) séparé et en ce que les parties (213) des grands côtés, parallèles à la direction de déplacement du bac (126), du rail profilé (201), sont conçues comme un rail de guidage pour un bord (215) du bac (126).

8. Porte-bagages selon la revendication 7, caractérisé en ce que le rail profilé (201), s'étendant en boucle fermée le long du bord du couvercle, correspond dans sa section transversale à un double profilé en C avec un fraisage (217) dans la région d'une extrémité des deux parties (213) des grands côtés, pour guider le bord de bac (215) à l'extérieur du rail profilé (201).

9. Porte-bagages pour véhicules à deux roues selon l'une des revendications précédentes, caractérisé en ce qu'il est prévu, sur chacun des deux côtés, parallèles à la direction de déplacement du bac (126), du porte-bagages (120), un rail de guidage (301) contre lequel est guidé coulissant longitudinalement le couvercle (124) ainsi que le bac (126), en vue de l'extraction télescopique du bac (126).

10. Porte-bagages pour véhicules à deux roues selon l'une des revendications précédentes, caractérisé en ce qu'il est prévu au moins une sangle d'arrimage (140) pour fixer des objets sur la surface d'appui du couvercle (124) dont une extrémité est placée sur le couvercle (124) et dont l'autre extrémité est placée sur une poignée (128) et en ce que la longueur de la sangle d'arrimage est variable entre le couvercle (124) et la poignée.

11. Porte-bagages selon la revendication 10, caractérisé en ce que l'extrémité côté poignée de la sangle d'arrimage (140) est fixée sur la poignée (128), avec un nombre variable d'enroulements.

12. Porte-bagages selon la revendication 11, caractérisé en ce que la sangle d'arrimage (340) passe à travers une fente de la poignée (390), dont un bord de fente (398) est formé par un levier de serrage (400) formé par la poignée (387), pour la fixation serrée de la sangle d'arrimage (340) dans une position serrée du levier de serrage (400).

13. Porte-bagages selon la revendication 12, caractérisé en ce que le levier de serrage (400) est déplaçable vers sa position serrée, par la sangle d'arrimage (340), entre la poignée (387) et le couvercle.

14. Porte-bagages selon la revendication 13, caractérisé en ce que l'extrémité (392) côté poignée de la sangle d'arrimage peut être fixée sur la sangle d'arrimage (340), entre la poignée (387) et le couvercle, au moyen d'un élément coulissant (394).

15. Porte-bagages pour véhicules à deux roues avec une tringlerie soutenant le couvercle (124) sous le véhicule à deux roues, selon l'une des revendications précédentes, caractérisé en ce que la tringlerie est rassemblée dans un grand côté du porte-bagages au moyen d'un sabot (76 ; 176) et peut être fixée par celui-ci contre un point fixe du véhicule à deux roues, en ce que le sabot présente une ouverture d'insertion afin de loger une extrémité d'insertion (23 ; 123) de la tringlerie, dans différentes positions longitudinales au choix, en ce que l'ouverture d'insertion est excentrée par rapport au point fixe et en ce que le sabot (76 ; 176) peut être emboîté au choix dans l'une des deux positions tournées de 180° l'une par rapport à l'autre autour de l'axe longitudinal de la tringlerie, à l'extrémité d'insertion (23 ; 123) de la tringlerie et peut être fixé sur le point fixe.

16. Porte-bagages selon la revendication 15, caractérisé en ce que le porte-bagages (20 ; 120) peut être fixé au choix dans une position de montage avant et dans une position de montage arrière, sur le véhicule à deux roues et en ce que l'excentricité (j) du sabot (76 ; 176) correspond à la moitié de la distance (i) séparant les deux positions de montage.

16

17. Porte-bagages pour véhicules à deux roues selon l'une des revendications précédentes, caractérisé en ce que sur les deux bords du bac, parallèles à la direction de déplacement du bac (126), il est placé une cornière profilée (500), chaque cornière coopérant avec une contre-cornière profilée (506), sur la face inférieure du couvercle (124), servant de guidage pour le coulissement du bac (figure 34A).

18. Porte-bagages selon l'une des revendications 2 à 17, caractérisé en ce que le dispositif de fermeture (610) comprend un élément de transmission de force monté coulissant sur le couvercle, dans la direction de déplacement du bac, lequel élément de transmission agit, par un guidage à coulisse, sur les éléments de fermeture (606) montés coulissants, transversalement à la direction de déplacement du bac.

19. Porte-bagages selon la revendication 18, caractérisé en ce que les deux éléments de fermeture (606) sont reliés entre eux par un ressort de précontrainte (620).

20. Porte-bagages selon l'une des revendications précédentes, caractérisé en ce que le couvercle (24) et le bac (26) avec leurs rails de guidage (54, 53) sont réalisés chacun en matière plastique ou en métal léger.

21. Porte-bagages selon l'une des revendications 15 à 20, caractérisé en ce que la tringlerie (22) est constituée d'au moins un étrier en U dont les branches s'étendent des deux côtés de la roue (10, 11) du véhicule et dont la pièce de liaison est fixée dans le couvercle (24).

22. Porte-bagages selon l'une des revendications précédentes, caractérisé en ce que le couvercle (24) est un plateau d'appui (71) fermé avec nervures (72) à angle droit côté bac ainsi que deux surfaces latérales (63) sur chacune desquelles est formée une cloison faisant saillie vers l'intérieur du porte-bagages pour servir de rail de guidage (54).

23. Porte-bagages selon l'une des revendications précédentes, caractérisé en ce que le couvercle (24) et le bac (26) se rétrécissent à la manière d'un nez, au moins vers un petit côté, en vue de dessus.

24. Porte-bagages selon l'une des revendications précédentes, caractérisé en ce que le couvercle (24) présente dans la zone de rétrécissement une surface de pupitre (30) inclinée, dépassant de la surface d'appui (28), ainsi qu'une surface frontale (38) s'étendant en sens contraire.

25. Porte-bagages selon l'une des revendications précédentes, caractérisé en ce que le bac (26) présente, dans la zone de rétrécissement, une surface inférieure (39) inclinée vers le sol.

26. Porte-bagages selon l'une des revendications précédentes, caractérisé en ce que le couvercle (24) présente, à peu près dans le prolongement de sa surface de pupitre (30), sur son contour de couvercle inférieur, un épaulement (45) servant de butée pour un gradin correspondant du bord de bac.

27. Porte-bagages avec un organe de raccordement en forme d'équerre, prévu sur un petit côté, pour assembler une aile d'équerre à un élément du véhicule à deux roues faisant saillie vers le haut, selon l'une des revendications précédentes, caractérisé par un organe de raccordement (43, 48a) à fixer de manière interchangeable sur le couvercle (24), de telle sorte que l'aile (49) à raccorder à l'élément saillant s'étende à peu près parallèlement à cet élément et que l'écartement entre l'aile et le couvercle soit variable par échange.

28. Porte-bagages selon la revendication 27, caractérisé en ce que le point d'assemblage entre le couvercle (24) et l'organe de raccordement (48, 48a) est placé de manière à être recouvert par le bac (26).

29. Porte-bagages selon la revendication 27 ou 28, caractérisé en ce que l'organe de raccordement est une surface coudée (48) ou un étrier (48a) plié de la même façon.

30. Porte-bagages selon l'une des revendications précédentes, caractérisé en ce que l'élément de fermeture (69) en forme de tige s'étend, avec son extrémité de butée, parallèlement au bord du bac ou parallèlement à une baguette (53), en forme de L, faisant saillie vers l'intérieur, du bac (26).

31. Porte-bagages selon l'une des revendications précédentes, caractérisé en ce que le trou de raccordement (64) est prévu dans une pièce rapportée (62) séparée qui est montée dans un évidement du couvercle (24).

**32.** Porte-bagages selon l'une des revendications précédentes, caractérisé en ce que sur un bord longitudinal au moins du couvercle (24) il est prévu au moins deux trous de raccordement dans la surface latérale (63) et/ou dans la surface d'appui (28).

**33.** Porte-bagages selon la revendication 32, caractérisé en ce qu'à un trou de raccordement (64) de la surface d'appui (28) est associé un trou de raccordement (64) pratiqué dans la surface latérale (63) voisine du couvercle (24).

**34.** Porte-bagages selon la revendication 32 ou 33, caractérisé en ce qu'il est associé à la paire de trous (64) un logement (65) commun, derrière la surface latérale (63) du couvercle (24).

**35.** Porte-bagages selon l'une des revendications précédentes, caractérisé en ce qu'il est prévu dans le couvercle (24) des éléments de retenue (35, 37a) pour la surface d'appui (28), sur la sangle d'arrimage (40) associée à celle-ci.

**36.** Porte-bagages selon la revendication 35, caractérisé par des fentes (35) en forme de trous de serrure, pratiquées dans la surface de pupitre (30) ou des traverses (37a) destinées à loger une sangle d'arrimage (40).

**37.** Porte-bagages selon l'une des revendications précédentes, caractérisé en ce que des nervures (29) de hauteur réduite se dressent sur la surface d'appui (18), parallèlement et transversalement aux sangles d'arrimage (40).

**38.** Porte-bagages selon l'une des revendications précédentes, caractérisé en ce que les extrémités libres des sangles d'arrimage (40) sont assemblées par une poignée (87) et en ce que celle-ci est conçue de manière à s'accrocher à l'extrémité arrière du couvercle (24).

**39.** Porte-bagages selon la revendication 38, caractérisé en ce que la poignée (87) est pourvue d'extrémités en crochet (88) qui font partie d'un étrier formant ressort (93) (figure 31).

**40.** Porte-bagages selon l'une des revendications précédentes, caractérisé en ce que le couvercle (24) présente,au-dessus de l'arrière du bac, au moins un organe de prise configuré en bourrelet creux (32) ou en baguette transversale (46).

**41.** Porte-bagages selon l'une des revendications précédentes 1 à 24, caractérisé en ce que le bac (26) est pourvu à l'arrière d'au moins un cataphote (57) et/ou d'un clignotant (51).

**42.** Porte-bagages selon l'une des revendications précédentes, caractérisé en ce que le bac (26) est pourvu à l'arrière d'au moins un projecteur (55) et/ou un clignotant (51).

**Claims**

**1.** A luggage carrier for two-wheeled vehicles, comprising,
– supported on the two-wheeled vehicle, a cover (luggage carrier plate) (24), the top of which is constructed with a supporting surface to receive loads,
– a container (26) guided like a drawer on the cover (24),
– at least one keyhole-shaped connecting hole (64) in the cover (24) for separable attachment of an accessory device, particularly a side pocket, child's seat, via a respective connecting member (67) provided on the accessory device,
– a closing means (21) for locking the relevant accessory device on the luggage carrier, with a closing part in the form of a locking bolt (69) for the connecting holes (64) and which in an open position of the closure means exposes the wide part of the connecting hole (64) for insertion or removal of a connecting head of the connecting member (67) into or out of the receiving space in the cover and below the connecting hole and which in a closed position of the closure means engages the space in order to fix the connecting member (67) in the narrow portion (262) of the connecting hole (64),
– a closure element (58) for locking the container (26) in a pushed-in position on the cover (24) and for locking the closure means in its closed position,
characterised in that

the container (26) is rigidly connected to the locking bolt (69) so that when it moves into its pushed-in position, the container (26) moves the locking bolt (69) into the holding space.

2. A luggage carrier for two-wheeled vehicles comprising
  – supported on the two-wheeled vehicle, a cover (luggage carrier plate) (124), the top of which is constructed with a supporting surface to receive loads,
  – a container (126) guided like a drawer on the cover (124),
  – at least one keyhole-shaped connecting hole (164) in the cover (124) for separable attachment of an accessory device, particularly a side pocket, child's seat, via a respective connecting member (167) provided on the accessory device,
  – a closing means (210) for locking the relevant accessory device on the luggage carrier, with a closing part (206) for the connecting holes (164) and which, in an open position of the closure means (210) exposes the wide part (264) of the connecting hole (164) for insertion or removal of a connecting head (266) of the connecting member (167) into or out of the receiving space (260) in the cover and below the connecting hole and which in a closed position of the closure means (210, 310) engages the space (260) in order to fix the connecting member (167) in the narrow portion (262) of the connecting hole (164),
  – a closure element (158) for locking the container (126) in a pushed-in position on the cover (124) and for locking the closure means in its closed position,
  characterised in that
  the closure means comprises, mounted for movement on the cover, an actuating part against which the container (126) abuts when it approaches its pushed-in position in order to move the closure means (210, 310) into its closed position as the container moves into its pushed-in position.

3. A luggage carrier according to Claim 2, characterised by, pivotally mounted on the cover (24), a double-armed lever (314) one arm of which is constructed as the locking member (306) and against the other arm (316) of which the container (126) abuts as it approaches its pushed-in position, for pivotally moving the double-armed lever (314) into the closed position of the locking member (306).

4. A luggage carrier according to Claim 3, characterised by, mounted on the cover (124), a spring bracket (24) which engages the pivotally movable or lineally movable locking member (206) and against which the container (126) abuts as it approaches its pushed-in position.

5. A luggage carrier according to Claim 4, characterised in that the spring bracket (240) is substantially loop-shaped and in that at least one of two opposite side members (242) of the spring bracket (240) is coupled to a locking member (206) and in that one (246) of the two connecting arms (246, 250) which connect the side members (242) is supported on the cover (124) and in that as it approaches its pushed-in position the container (126) abuts the other connecting member (250) and, upon further movement into its pushed-in position, presses it in the direction of a connecting member (246).

6. A luggage carrier according to Claim 5, characterised in that the other connecting member (250) is constructed with an additional spring bracket loop (252) which forms an elongate hole (254) parallel with the direction of movement (A) of the container (126) and in that the elongate hole (254) is engaged by a guide pin (256) fixed to the cover (124).

7. A luggage carrier for two-wheeled vehicles according to one of the preceding Claims, characterised in that extending along the cover edge is a separate profiled rail (201) and in that the longitudinal side portions (213) of the profiled rail (201) which are parallel with the direction of movement of the container (126) are constructed as a guide rail for an edge (215) of the container (126).

8. A luggage carrier according to Claim 7, characterised in that the cross-section of the profiled rail (201) which extends in a closed loop along the edge of the cover corresponds to a double-C-shape with, in the region of one end of the two longitudinal side portions (213), a recess (217) to allow the container rim (215) to be moved out of the profiled rail (201).

9. A luggage carrier for two-wheeled vehicles according to one of the preceding Claims, characterised in that on both those sides of the luggage carrier (120) which are parallel with the direction of movement of the container (126) there is a guide rail (301) on which both the cover (124) and also the container (126) are guided for longitudinal movement, for telescopic extension of the container (124).

10. A luggage carrier for two-wheeled vehicles according to one of the preceding Claims, characterised in that at least one lashing member (140) is provided for attaching objects to the supporting surface of the cover (124) and of which one end is fixed to the cover (124) while its other end is connected to a handle (128), and in that the length of the lashing member between the cover (124) and the handle is variable.

11. A luggage carrier according to Claim 10, characterised in that the handle end of the lashing member (140) is fixed to the handle (128) with a variable number of turns.

12. A luggage carrier according to Claim 11, characterised in that the lashing member (340) is passed through a slot in the handle (390), one edge (398) of the slot being formed by a clamping lever (400) constructed on the handle (387) for clamping the lashing member (340) in a clamped position of the clamping lever (400).

13. A luggage carrier according to Claim 12, characterised in that the clamping lever (400) can be moved into its clamping position by the tensioned lashing member (340) between the handle (387) and the cover.

14. A luggage carrier according to Claim 13, characterised in that the free end (392) at the handle end of the lashing member can be fixed on the lashing member (340) by means of a displaceable part (394) between the handle (387) and the cover.

15. A luggage carrier for two-wheeled vehicles according to one of the preceding Claims, having a linkage supporting the cover (124) on the two-wheeled vehicle, characterised in that the linkage on one long side of the luggage carrier is held together by a shoe (76, 176) by which it can be attached to a fixed point on the two-wheeled vehicle and in that the shoe is constructed with a push-in aperture to accommodate a pushed-in end (23, 123) of the linkage in optionally different longitudinal positions and in that the push-in aperture is disposed eccentrically of the fixed point and in that the shoe (76, 176) can be fitted onto the push-in end (23, 123) of the linkage optionally in one of two positions which are rotated through 100° in respect of each other about the longitudinal axis of the linkage and can be attached to the fixed point.

16. A luggage carrier according to Claim 15, characterised in that the luggage carrier (20, 120) can be fitted to the two-wheeled vehicle optionally in a front or rear assembly position and in that the eccentricity (j) of the shoe (76, 176) corresponds to half the gap (i) between the two assembly positions.

17. A luggage carrier for two-wheeled vehicle, characterised in that on both container edges which are parallel with the direction of movement of the container (126) there is an angled profiled rail (500) which cooperates with a respective matching angled profiled rail (506) on the underside of the cover (124) to act as a guide for displacement of the container (Fig. 34A).

18. A luggage carrier according to one of Claims 2 to 17, characterised in that the closure means (610) comprises, mounted for displacement on the cover in the direction of movement of the container a force transmitting member which via a sliding guide-way engages the closure members (606) mounted for displacement cross-wise to the direction of movement of the container.

19. A luggage carrier according to Claim 18, characterised in that both closure members (606) are connected to each other via a pre-tensioning spring (620).

20. A luggage carrier according to one of the preceding Claims, characterised in that cover (24) and container (26) with their guide rails (54, 53) are in each case made Prom synthetic plastics material or from light metal.

21. A luggage carrier according to one of Claims 15 to 20, characterised in that the linkage (22) consists of at least one U-shaped bracket the arms of which extend on both sides of the vehicle wheel (10, 11), their connecting member being fixed in the cover (24).

22. A luggage carrier according to one of the preceding Claims, characterised in that the cover (24) is a closed supporting plate (71) having at right-angles to it ribs (72) and two lateral faces (63) each of which is constructed as a web projecting into the interior of the carrier to form guide rails (54).

23. A luggage carrier according to one of the preceding Claims, characterised in that, in plan view, cover (24) and container (26) taper at least towards one narrow side.

**24.** A luggage carrier according to one of the preceding Claims, characterised in that in the tapering portion the cover (24) has projecting from the supporting surface (28) an upwardly inclined surface (30) and a front surface (30) which is inclined in the opposite direction.

**25.** A luggage carrier according to one of the preceding Claims, characterised in that in the tapering portion the container (26) has an underside (39) which is inclined towards the ground.

**26.** A luggage carrier according to one of the preceding Claims, characterised in that the cover (24) has substantially as an extension of its surface (30) and in the lower contours of the cover a shoulder (45) which serves as an abutment for a corresponding step in the rim of the container.

**27.** A luggage carrier with, provided on a narrow side, an angled connecting member for connecting one arm of the angle to an upwardly projecting part of the two-wheeled vehicle, according to one of the preceding Claims, characterised by a connecting member (48, 48a) which is so interchangeably mounted on the cover (24) that the arm (49) which has to be adjacent the upwardly projecting part extends substantially parallel with this part and in that the distance between the arm and the cover can be varied by exchange.

**28.** A luggage carrier according to Claim 27, characterised in that the point of attachment of the cover (24) and the connecting member (48, 48a) is masked by the container (26).

**29.** A luggage carrier according to Claim 27 or 28, characterised in that the connecting member is an angled surface (48) or a correspondingly curved U-shaped member (48a).

**30.** A luggage carrier according to one of the preceding Claims, characterised in that the bolt-like locking member (69) has its abutting end extending parallel with the container rim or an L-shaped inwardly projecting strip (53) on the container (26).

**31.** A luggage carrier according to one of the preceding Claims, characterised in that a connection hole (64) is provided in a separate inserted member (62) which is mounted in a recess in the cover (24).

**32.** A luggage carrier according to one of the preceding Claims, characterised in that on at least one longitudinal edge of the cover (24) there are at least two connection holes in the lateral face (63) and/or in the supporting surface (28).

**33.** A luggage carrier according to Claim 32, characterised in that a connection hole (64) is provided in the adjacent lateral surface (63) of the cover (24) and is associated with a respective connection hole (64) in the supporting surface (28).

**34.** A luggage carrier according to Claim 32 or 33, characterised in that a common space (65) behind the lateral surface (63) of the cover (24) is associated with the pair of connection holes (64).

**35.** A luggage carrier according to one of the preceding Claims, characterised in that there are in the cover (24) retaining elements (35, 37a) for lashing members (40) associated with and provided on the supporting surface (28).

**36.** A luggage carrier according to Claim 35, characterised by keyhole-shaped slots (35) in the sloping surface (30) or transverse webs (37a) to accommodate a lashing member (40).

**37.** A luggage carrier according to one of the preceding Claims, characterised in that low ribs (29) project from the supporting surface (28) parallel with and cross-wise to the lashing members (40).

**38.** A luggage carrier according to one of the preceding Claims, characterised in that the free ends of the lashing members (40) are connected by a handle member (87) and in that this is constructed to be engaged into the rear end of the cover (24).

**39.** A luggage carrier according to Claim 38, characterised in that the handle member (87) is provided with hook ends (38) which are part of a spring bracket (93) (Fig. 31).

**40.** A luggage carrier according to one of the preceding Claims, characterised in that the cover (24) has above the rear of the container at least one handle member constructed as a hollow bead (32) or transverse strip (46).

41. A luggage carrier according to one of the preceding Claims 1 to 24, characterised in that the container (26) is provided at the rear with at least one rear reflector (57) and/or one flashing light (51).

42. A luggage carrier according to one of the preceding Claims, characterised in that the rear of the container (26) is provided with at least one headlight-type lamp (55) and/or a flashing light (51).

Fig.1

Fig.2

Fig.3

Fig.4

Fig.8

Fig.6

Fig.5

Fig.7

Fig.9

Fig.10

Fig.11

Fig.12

Fig.13

Fig.14

Fig.16

Fig.15

Fig.17

Fig.18

Fig.19　Fig.20

Fig.21

Fig.23

Fig.22

Fig.25

Fig.24

Fig.26

Fig.27

Fig.28

Fig.29

Fig.30

Fig.31

Fig.32

EP 0 329 136 B1

Fig. 33

Fig. 34

Fig. 34A

Fig

Fig. 35

Fig. 35A

Fig. 36

EP 0 329 136 B1

Fig. 37

Fig. 38